# EUROPEAN PATENT APPLICATION

(11) **EP 4 564 969 A1**
(43) Date of publication of application: **04.06.2025**
(21) Application number: 23851964.9
(22) Date of filing: 11.08.2023
(51) Int. Cl.: H04W 72/04

(54) **COMMUNICATION METHOD AND COMMUNICATION APPARATUS**

(30) Priority: 12.08.2022 CN 202210968331
(71) Applicant: Huawei Technologies Co., Ltd., Shenzhen, Guangdong 518129 (CN)
(72) Inventor: LIU, Yunfeng, Shenzhen, Guangdong 518129 (CN); GUO, Zhiheng, Shenzhen, Guangdong 518129 (CN); XIE, Xinqian, Shenzhen, Guangdong 518129 (CN); SONG, Xinghua, Shenzhen, Guangdong 518129 (CN)
(74) Representative: Gill Jennings & Every LLP
(86) International application number: PCT/CN2023/112420
(87) International publication number: WO 2024/032744

(57) **Abstract**

This application provides a communication method and a communication apparatus. The method includes: A terminal device determines a reference cell and at least one other cell in a first time unit, where the reference cell and the at least one other cell are activated serving cells configured with transmission directions in the first time unit; and the transmission direction of the reference cell in the first time unit collides with a transmission direction of a first other cell in the first time unit, at least one of the reference cell and the first other cell is a subband full duplex cell, the subband full duplex cell includes a first subband and a second subband, and the first other cell is any other cell. The terminal device determines the transmission direction of the at least one of the reference cell and the first other cell in the first time unit based on the first subband. According to the foregoing technical solutions, this application can resolve inconsistent transmission directions of different component carriers when cells corresponding to the component carriers include a subband full duplex cell.

## Description

This application claims priority to Chinese Patent Application No. 202210968331.9, filed with the China National Intellectual Property Administration on August 12, 2022 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

In a wireless communication system, a peak rate of a terminal device is closely related to a communication bandwidth that can be obtained by the terminal device. When a communication bandwidth of a single cell is fixed, communication bandwidths of a plurality of cells may be aggregated by using a carrier aggregation technology, so that the peak rate of the terminal device is improved.

In a carrier aggregation scenario, when a secondary component carrier is configured for the terminal device, both a carrier index of the secondary component carrier and a cell identity of a secondary cell that operates on the secondary component carrier may be carried. In this case, a carrier and a cell are equivalent concepts. For example, a carrier accessed by the terminal device and a cell accessed by the terminal device are equivalent concepts. A bandwidth of the carrier may be understood as a communication bandwidth of the cell. A plurality of carriers (which may also be referred to as component carriers) are aggregated, so that a communication bandwidth obtained by the terminal device is a sum of bandwidths of the plurality of component carriers, and a peak rate of the terminal device can also be improved.

On one symbol, transmission directions of different component carriers may be inconsistent. An existing directional collision handling rule for resolving the inconsistent transmission directions of different component carriers is applicable to a scenario in which cells corresponding to the component carriers are all conventional time division duplex cells in a time division duplex system, but is not applicable to a scenario in which the cells corresponding to the component carriers include a subband full duplex cell in the time division duplex system.

### SUMMARY

This application provides a communication method and a communication apparatus, and can resolve inconsistent transmission directions of different component carriers when cells corresponding to the component carriers include a subband full duplex cell.

According to a first aspect, a communication method is provided, including: A terminal device determines a reference cell and at least one other cell in a first time unit, where the reference cell and the at least one other cell are activated serving cells configured with transmission directions in the first time unit; and the transmission direction of the reference cell in the first time unit collides with a transmission direction of a first other cell in the first time unit, at least one of the reference cell and the first other cell is a subband full duplex cell, the subband full duplex cell includes a first subband and a second subband, and the first other cell is any one of the at least one other cell. The terminal device determines the transmission direction of the at least one of the reference cell and the first other cell in the first time unit based on the first subband.

According to the foregoing technical solutions, this application can resolve inconsistent transmission directions of different component carriers when cells corresponding to the component carriers include a subband full duplex cell.

Specifically, when the cells corresponding to the component carriers include the SBFD cell, and the SBFD cell includes at least two subbands, the terminal device may determine a first subband of the SBFD cell, and determine a transmission direction of at least one of a reference cell and a first other cell in the first time unit based on the first subband.

Optionally, the reference cell may be the SBFD cell, or the first other cell may be the SBFD cell, or the reference cell and the first other cell each are the SBFD cell. In a scenario in which the reference cell and the first other cell each are the SBFD cell, the terminal device needs to determine a representative subband (for example, the first subband) used by the reference cell to participate in directional collision handling and a representative subband (for example, a third subband) used by the first other cell to participate in the directional collision handling, and determine transmission directions of the respective representative subbands in the first time unit based on the respective representative subbands.

With reference to the first aspect, in some implementations of the first aspect, a transmission direction of the first subband in the first time unit collides with a transmission direction of the second subband in the first time unit.

In this way, an increase in incorrect determining cases caused by two completely different collision determining results obtained due to the collision between the transmission directions of the first subband and the second subband in a time unit W1 can be avoided, thereby effectively resolving the inconsistent transmission directions of different component carriers when the cells corresponding to the component carriers include the subband full duplex cell.

With reference to the first aspect, in some implementations of the first aspect, the transmission direction includes at least one of the following: a signal transmission direction or a statically configured symbol direction; and the signal transmission direction includes at least one of the following: a static signal transmission direction or a dynamic signal transmission direction.

Specifically, the at least one other cell may be configured with any one of the static signal transmission direction, the dynamic signal transmission direction, and the statically configured symbol direction in the first time unit, and the reference cell may be configured with the any one of the static signal transmission direction, the dynamic signal transmission direction, and the statically configured symbol direction in the first time unit.

With reference to the first aspect, in some implementations of the first aspect, the reference cell is an activated serving cell configured with a static transmission direction in the first time unit; and the static transmission direction includes at least one of the following: the static signal transmission direction or the statically configured symbol direction.

In this way, it can be avoided that selection of the reference cell changes with transmission of a dynamic signal. The terminal device may determine the reference cell in the first time unit in advance, to avoid that the terminal device and the cell have inconsistent understandings of the reference cell due to a failure to receive the dynamic signal.

With reference to the first aspect, in some implementations of the first aspect, the first subband meets at least one of the following conditions:
Condition 1: The first subband is configured with a signal transmission direction in the first time unit, and the second subband is not configured with a signal transmission direction in the first time unit, where the signal transmission direction of the first subband in the first time unit collides with a statically configured symbol direction of the second subband in the first time unit.
Condition 2: The first subband is configured with the signal transmission direction in the first time unit, the second subband is configured with the signal transmission direction in the first time unit, and the signal transmission direction of the first subband in the first time unit is consistent with a final signal transmission direction of the subband full duplex cell, where the signal transmission direction of the first subband in the first time unit collides with the signal transmission direction of the second subband in the first time unit.
Condition 3: The first subband is configured with a statically configured symbol direction in the first time unit, the second subband is configured with the statically configured symbol direction in the first time unit, and an identity of the first subband is less than or greater than an identity of the second subband, or the statically configured symbol direction of the first subband in the first time unit is an uplink or a downlink, where the statically configured symbol direction of the first subband in the first time unit collides with the statically configured symbol direction of the second subband in the first time unit, the first subband is not configured with the signal transmission direction in the first time unit, and the second subband is not configured with the signal transmission direction in the first time unit.

Specifically, the terminal device may determine, based on one or more of the foregoing plurality of conditions, the first subband that is in the plurality of subbands of the SBFD cell and that is used to process the transmission direction collision between the reference cell and the first other cell in the first time unit. In this way, an increase in incorrect determining cases caused by two completely different collision determining results obtained due to the collision between the transmission directions of the first subband and the second subband in the time unit W1 can be avoided, thereby effectively resolving the inconsistent transmission directions of different component carriers when the cells corresponding to the component carriers include the subband full duplex cell.

The foregoing three conditions may be considered as examples of the collision handling within the SBFD cell. The transmission direction of the SBFD cell is determined based on the collision handling within the SBFD cell. The first subband has the same transmission direction as the SBFD cell. Specifically, the collision handling within the SBFD cell is subject to a final protocol. This is not limited in the invention content of this application.

In addition, the final signal transmission direction of the SBFD cell may be determined by using the following examples:
(1) When the transmission direction configured for the first subband in the first time unit is Dynamic-D, and the transmission direction configured for the second subband in the first time unit is RRC-U, the terminal device determines that the final signal transmission direction of the SBFD cell is a downlink transmission direction. Therefore, the terminal device selects the first subband to determine the transmission direction of the at least one of the reference cell and the first other cell in the time unit W1.
(2) When the transmission direction configured for the first subband in the first time unit is Dynamic-U, and the transmission direction configured for the second subband in the first time unit is RRC-D, the terminal device determines that the final signal transmission direction of the SBFD cell is an uplink transmission direction. Therefore, the terminal device selects the first subband to determine the transmission direction of the at least one of the reference cell and the first other cell in the time unit W1.

The foregoing two examples may be considered as examples of the collision handling within the SBFD cell. The transmission direction of the SBFD cell is determined based on the collision handling within the SBFD cell. The first subband has the same transmission direction as the SBFD cell. Specifically, the collision handling within the SBFD cell is subject to the final protocol. This is not limited in the invention content of this application.

With reference to the first aspect, in some implementations of the first aspect, before that a terminal device determines a reference cell and at least one other cell in a first time unit, the method further includes: The terminal device receives first indication information sent by a network device, where the first indication information indicates at least two activated serving cells configured by the network device for the terminal device, and the at least two activated serving cells include at least one of SBFD cells.

The terminal device may determine the reference cell and the at least one other cell based on the indication information that is delivered by the network device and that indicates the at least two activated serving cells configured by the network device for the terminal device. In this way, it can be avoided that a non-activated serving cell participates in subsequent directional collision handling, thereby reducing processing complexity of the terminal.

It should be understood that the reference cell and the at least one other cell each are the activated serving cell in the at least two activated serving cells.

With reference to the first aspect, in some implementations of the first aspect, that a terminal device determines a reference cell and at least one other cell in a first time unit includes: The terminal device determines a first cell set, where each cell in the first cell set is an activated serving cell that is configured with the static transmission direction and that is in the at least two activated serving cells. The terminal device determines a first cell as the reference cell, where the first cell is any activated serving cell in the first cell set, and all cells other than the first cell in the at least two activated serving cells are the at least one other cell.

Specifically, the terminal device may select, from the at least two activated serving cells, a cell set that may be used as reference cells, and each cell in the cell set is an activated serving cell configured with the static transmission direction in the first time unit. Then, the terminal device may select any cell from the cell set as the reference cell. In this way, it can be avoided that selection of the reference cell changes with transmission of a dynamic signal. The terminal device may determine the reference cell in the first time unit in advance, to avoid that the terminal device and the cell have inconsistent understandings of the reference cell due to a failure to receive the dynamic signal.

After the terminal device determines the first cell from the cell set as the reference cell, all the cells other than the first cell in the at least two activated serving cells are the other cells.

It should be understood that each of the at least two activated serving cells is configured with a transmission direction in the first time unit.

With reference to the first aspect, in some implementations of the first aspect, an index value of the first cell is a smallest value in index values of all the cells in the first cell set.

With reference to the first aspect, in some implementations of the first aspect, each of the at least one of the SBFD cells included in the first cell set is configured with a signal transmission direction in the first time unit.

Specifically, in the SBFD cell, symbol direction configurations of a plurality of subbands may be different. In this case, the symbol direction configurations of the subbands cannot represent the transmission direction of the SBFD cell. When a plurality of subbands of the SBFD cell have static symbol direction configurations, configurations of statically configured symbol directions of two subbands are opposite, and no signal is transmitted on the plurality of subbands, it can be avoided that the SBFD cell participates in directional collision handling determining, thereby reducing processing complexity of the terminal. That is, only the SBFD cell with signal transmission participates in the directional collision handling.

With reference to the first aspect, in some implementations of the first aspect, before the terminal device receives first indication information sent by a network device, the method further includes:
The terminal device sends second indication information to the network device, where the second indication information indicates whether the terminal device supports an inter-band simultaneous transmission and reception capability.

In this way, the terminal device that supports the inter-band transmission and reception capability can perform directional collision handling within the frequency band.

With reference to the first aspect, in some implementations of the first aspect, when the second indication information indicates that the terminal device supports the inter-band simultaneous transmission and reception capability, a frequency band to which all the cells in the first cell set belong is a first frequency band; or when the second indication information indicates that the terminal device does not support the inter-band simultaneous transmission and reception capability, frequency bands to which all the cells in the first cell set belong include a first frequency band and a second frequency band, and the second frequency band is different from the first frequency band.

With reference to the first aspect, in some implementations of the first aspect, the first other cell is other cell configured with a directional collision handling parameter, and the directional collision handling parameter is used by the terminal device to determine that the first other cell participates in directional collision handling.

The foregoing parameter is used, so that the terminal device may determine that when the transmission directions of the first other cell and the reference cell collide in the first time unit, the terminal device may handle the transmission direction collision.

With reference to the first aspect, in some implementations of the first aspect, the first time unit includes at least one of the following: a slot, a symbol, or a mini-slot.

Specifically, when the first time unit is the slot (which may be one slot, or may be a plurality of slots), collision determining handling for the foregoing transmission direction collision is performed on the slot. When the first time unit is the symbol (which may be one symbol, or may be a plurality of symbols), collision determining handling for the foregoing transmission direction collision is performed on the symbol. When the first time unit is the mini-slot (mini-slot) (which may be one mini-slot, or may be a plurality of mini-slots), collision determining handling for the foregoing transmission direction collision is performed on the mini-slot.

According to a second aspect, a communication method is provided, including: A network device determines a reference cell and at least one other cell in a first time unit, where the reference cell and the at least one other cell are activated serving cells configured with transmission directions in the first time unit; and the transmission direction of the reference cell in the first time unit collides with a transmission direction of a first other cell in the first time unit, at least one of the reference cell and the first other cell is a subband full duplex SBFD cell, the SBFD cell includes a first subband and a second subband, and the first other cell is any one of the at least one other cell. The network device determines the transmission direction of the at least one of the reference cell and the first other cell in the first time unit based on the first subband.

With reference to the second aspect, in some implementations of the second aspect, a transmission direction of the first subband in the first time unit collides with a transmission direction of the second subband in the first time unit.

With reference to the second aspect, in some implementations of the second aspect, the transmission direction includes at least one of the following: a signal transmission direction or a statically configured symbol direction; and the signal transmission direction includes at least one of the following: a static signal transmission direction or a dynamic signal transmission direction.

With reference to the second aspect, in some implementations of the second aspect, the reference cell is an activated serving cell configured with a static transmission direction in the first time unit; and the static transmission direction includes at least one of the following: the static signal transmission direction or the statically configured symbol direction.

With reference to the second aspect, in some implementations of the second aspect, the first subband meets at least one of the following conditions:

The first subband is configured with a signal transmission direction in the first time unit, and the second subband is not configured with a signal transmission direction in the first time unit, where the signal transmission direction of the first subband in the first time unit collides with a statically configured symbol direction of the second subband in the first time unit.

The first subband is configured with the signal transmission direction in the first time unit, the second subband is configured with the signal transmission direction in the first time unit, and the signal transmission direction of the first subband in the first time unit is consistent with a final signal transmission direction of the SBFD cell, where the signal transmission direction of the first subband in the first time unit collides with the signal transmission direction of the second subband in the first time unit.

The first subband is configured with a statically configured symbol direction in the first time unit, the second subband is configured with the statically configured symbol direction in the first time unit, the first subband is not configured with the signal transmission direction in the first time unit, the second subband is not configured with the signal transmission direction in the first time unit, and an identity of the first subband is less than or greater than an identity of the second subband, or the statically configured symbol direction of the first subband in the first time unit is an uplink or a downlink, where the statically configured symbol direction of the first subband in the first time unit collides with the statically configured symbol direction of the second subband in the first time unit.

With reference to the second aspect, in some implementations of the second aspect, before that a network device determines a reference cell and at least one other cell in a first time unit, the method further includes: The network device sends first indication information to a terminal device, where the first indication information indicates at least two activated serving cells configured by the network device for the terminal device, and the at least two activated serving cells include at least one of SBFD cells.

With reference to the second aspect, in some implementations of the second aspect, that a network device determines a reference cell and at least one other cell in a first time unit includes: The network device determines a first cell set, where each cell in the first cell set is an activated serving cell that is configured with the static transmission direction and that is in the at least two activated serving cells. The network device determines a first cell as the reference cell, where the first cell is any activated serving cell in the first cell set, and all cells other than the first cell in the at least two activated serving cells are the at least one other cell.

With reference to the second aspect, in some implementations of the second aspect, an index value of the first cell is a smallest value in index values of all the cells in the first cell set.

With reference to the first aspect, in some implementations of the first aspect, each of the at least one of the SBFD cells included in the first cell set is configured with a signal transmission direction in the first time unit.

With reference to the second aspect, in some implementations of the second aspect, before that the network device sends first indication information to a terminal device, the method further includes: The network device receives second indication information sent by the terminal device, where the second indication information indicates whether the terminal device supports an inter-band simultaneous transmission and reception capability.

With reference to the second aspect, in some implementations of the second aspect, when the second indication information indicates that the terminal device supports the inter-band simultaneous transmission and reception capability, a frequency band to which all the cells in the first cell set belong is a first frequency band; or when the second indication information indicates that the terminal device does not support the inter-band simultaneous transmission and reception capability, frequency bands to which all the cells in the first cell set belong include a first frequency band and a second frequency band, and the second frequency band is different from the first frequency band.

With reference to the second aspect, in some implementations of the second aspect, the first other cell is other cell configured with a directional collision handling parameter, and the directional collision handling parameter is used by the network device to determine that the first other cell participates in directional collision handling.

With reference to the second aspect, in some implementations of the second aspect, the first time unit includes at least one of the following: a slot, a symbol, or a mini-slot.

According to a third aspect, a communication apparatus is provided, including: a processing unit, configured to determine a reference cell and at least one other cell in a first time unit, where the reference cell and the at least one other cell are activated serving cells configured with transmission directions in the first time unit; and the transmission direction of the reference cell in the first time unit collides with a transmission direction of a first other cell in the first time unit, at least one of the reference cell and the first other cell is a subband full duplex SBFD cell, the SBFD cell includes a first subband and a second subband, and the first other cell is any one of the at least one other cell. The processing unit is further configured to determine the transmission direction of the at least one of the reference cell and the first other cell in the first time unit based on the first subband.

With reference to the third aspect, in some implementations of the third aspect, a transmission direction of the first subband in the first time unit collides with a transmission direction of the second subband in the first time unit.

With reference to the third aspect, in some implementations of the third aspect, the transmission direction includes at least one of the following: a signal transmission direction or a statically configured symbol direction; and the signal transmission direction includes at least one of the following: a static signal transmission direction or a dynamic signal transmission direction.

With reference to the third aspect, in some implementations of the third aspect, the reference cell is an activated serving cell configured with a static transmission direction in the first time unit; and the static transmission direction includes at least one of the following: the static signal transmission direction or the statically configured symbol direction.

With reference to the third aspect, in some implementations of the third aspect, the first subband meets at least one of the following conditions:
The first subband is configured with a signal transmission direction in the first time unit, and the second subband is not configured with a signal transmission direction in the first time unit, where the signal transmission direction of the first subband in the first time unit collides with a statically configured symbol direction of the second subband in the first time unit.

The first subband is configured with the signal transmission direction in the first time unit, the second subband is configured with the signal transmission direction in the first time unit, and the signal transmission direction of the first subband in the first time unit is consistent with a final signal transmission direction of the SBFD cell, where the signal transmission direction of the first subband in the first time unit collides with the signal transmission direction of the second subband in the first time unit.

The first subband is configured with a statically configured symbol direction in the first time unit, the second subband is configured with the statically configured symbol direction in the first time unit, the first subband is not configured with the signal transmission direction in the first time unit, the second subband is not configured with the signal transmission direction in the first time unit, and an identity of the first subband is less than or greater than an identity of the second subband, or the statically configured symbol direction of the first subband in the first time unit is an uplink or a downlink, where the statically configured symbol direction of the first subband in the first time unit collides with the statically configured symbol direction of the second subband in the first time unit.

With reference to the third aspect, in some implementations of the third aspect, the apparatus further includes: a transceiver unit, configured to receive first indication information sent by a network device, where the first indication information indicates at least two activated serving cells configured by the network device for a terminal device, and the at least two activated serving cells include at least one of SBFD cells.

With reference to the third aspect, in some implementations of the third aspect, the processing unit is configured to: determine a first cell set, where each cell in the first cell set is an activated serving cell that is configured with the static transmission direction and that is in the at least two activated serving cells; and determine a first cell as the reference cell, where the first cell is any activated serving cell in the first cell set, and all cells other than the first cell in the at least two activated serving cells are the at least one other cell.

With reference to the third aspect, in some implementations of the third aspect, an index value of the first cell is a smallest value in index values of all the cells in the first cell set.

With reference to the third aspect, in some implementations of the third aspect, each of the at least one of the SBFD cells included in the first cell set is configured with a signal transmission direction in the first time unit.

With reference to the third aspect, in some implementations of the third aspect, an index value of the first cell is a smallest value in index values of all the cells in the cell set.

With reference to the third aspect, in some implementations of the third aspect, the SBFD cell included in the first cell set is configured with a signal transmission direction in the first time unit.

With reference to the third aspect, in some implementations of the third aspect, the transceiver unit is further configured to send second indication information to the network device, where the second indication information indicates whether the terminal device supports an inter-band simultaneous transmission and reception capability.

With reference to the third aspect, in some implementations of the third aspect, when the second indication information indicates that the communication apparatus supports the inter-band simultaneous transmission and reception capability, a frequency band to which all the cells in the cell set belong is a first frequency band; or when the second indication information indicates that the communication apparatus does not support the inter-band simultaneous transmission and reception capability, frequency bands to which all the cells in the cell set belong include a first frequency band and a second frequency band, and the second frequency band is different from the first frequency band.

With reference to the third aspect, in some implementations of the third aspect, the first other cell is other cell configured with a directional collision handling parameter, and the directional collision handling parameter is used by the communication apparatus to determine that the first other cell participates in directional collision handling.

With reference to the third aspect, in some implementations of the third aspect, the first time unit includes at least one of the following: a slot, a symbol, or a mini-slot.

According to a fourth aspect, a communication apparatus is provided, including: a processing unit, configured to determine a reference cell and at least one other cell in a first time unit, where the reference cell and the at least one other cell are activated serving cells configured with transmission directions in the first time unit; and the transmission direction of the reference cell in the first time unit collides with a transmission direction of a first other cell in the first time unit, at least one of the reference cell and the first other cell is a subband full duplex SBFD cell, the SBFD cell includes a first subband and a second subband, and the first other cell is any one of the at least one other cell. The processing unit is further configured to determine the transmission direction of the at least one of the reference cell and the first other cell in the first time unit based on the first subband.

With reference to the fourth aspect, in some implementations of the fourth aspect, a transmission direction of the first subband in the first time unit collides with a transmission direction of the second subband in the first time unit.

With reference to the fourth aspect, in some implementations of the fourth aspect, the transmission direction includes at least one of the following: a signal transmission direction or a statically configured symbol direction; and the signal transmission direction includes at least one of the following: a static signal transmission direction or a dynamic signal transmission direction.

With reference to the fourth aspect, in some implementations of the fourth aspect, the reference cell is an activated serving cell configured with a static transmission direction in the first time unit; and the static transmission direction includes at least one of the following: the static signal transmission direction or the statically configured symbol direction.

With reference to the fourth aspect, in some implementations of the fourth aspect, the first subband meets at least one of the following conditions:
The first subband is configured with a signal transmission direction in the first time unit, and the second subband is not configured with a signal transmission direction in the first time unit, where the signal transmission direction of the first subband in the first time unit collides with a statically configured symbol direction of the second subband in the first time unit.

The first subband is configured with the signal transmission direction in the first time unit, the second subband is configured with the signal transmission direction in the first time unit, and the signal transmission direction of the first subband in the first time unit is consistent with a final signal transmission direction of the SBFD cell, where the signal transmission direction of the first subband in the first time unit collides with a signal transmission direction of the second subband in the first time unit.

The first subband is configured with a statically configured symbol direction in the first time unit, the second subband is configured with the statically configured symbol direction in the first time unit, the first subband is not configured with the signal transmission direction in the first time unit, the second subband is not configured with the signal transmission direction in the first time unit, and an identity of the first subband is less than or greater than an identity of the second subband, or the statically configured symbol direction of the first subband in the first time unit is an uplink or a downlink, where the statically configured symbol direction of the first subband in the first time unit collides with the statically configured symbol direction of the second subband in the first time unit.

With reference to the fourth aspect, in some implementations of the fourth aspect, the apparatus further includes: a transceiver unit, configured to send first indication information to a terminal device, where the first indication information indicates at least two activated serving cells configured by the communication apparatus for the terminal device, and the at least two activated serving cells include at least one of the subband full duplex cells.

With reference to the fourth aspect, in some implementations of the fourth aspect, the processing unit is configured to: determine a first cell set, where each cell in the first cell set is an activated serving cell that is configured with the static transmission direction and that is in the at least two activated serving cells; and determine a first cell as the reference cell, where the first cell is any activated serving cell in the first cell set, and all cells other than the first cell in the at least two activated serving cells are the at least one other cell.

With reference to the fourth aspect, in some implementations of the fourth aspect, an index value of the first cell is a smallest value in index values of all the cells in the first cell set.

With reference to the fourth aspect, in some implementations of the fourth aspect, each of the at least one of the SBFD cells included in the first cell set is configured with a signal transmission direction in the first time unit.

With reference to the fourth aspect, in some implementations of the fourth aspect, an index value of the first cell is a smallest value in index values of all the cells in the cell set.

With reference to the fourth aspect, in some implementations of the fourth aspect, the SBFD cell included in the first cell set is configured with a signal transmission direction in the first time unit.

With reference to the fourth aspect, in some implementations of the fourth aspect, the transceiver unit is further configured to receive second indication information sent by the terminal device, where the second indication information indicates whether the terminal device supports an inter-band simultaneous transmission and reception capability.

With reference to the fourth aspect, in some implementations of the fourth aspect, when the second indication information indicates that the terminal device supports the inter-band simultaneous transmission and reception capability, a frequency band to which all the cells in the cell set belong is a first frequency band; or when the second indication information indicates that the terminal device does not support the inter-band simultaneous transmission and reception capability, frequency bands to which all the cells in the cell set belong include a first frequency band and a second frequency band, and the second frequency band is different from the first frequency band.

With reference to the fourth aspect, in some implementations of the fourth aspect, the first other cell is other cell configured with a directional collision handling parameter, and the directional collision handling parameter is used by the terminal device to determine that the first other cell participates in directional collision handling.

With reference to the fourth aspect, in some implementations of the fourth aspect, the first time unit includes at least one of the following: a slot, a symbol, or a mini-slot.

According to a fifth aspect, a communication apparatus is provided, including a processor. The processor is coupled to a memory, and the processor is configured to execute a computer program or instructions, to enable the communication apparatus to perform the method according to any one of the first aspect or the possible implementations of the first aspect, or to enable the communication apparatus to perform the method according to any one of the second aspect or the possible implementations of the second aspect.

In a possible implementation, the apparatus further includes the memory.

Optionally, the processor and the memory are integrated together, or the processor and the memory are separately disposed.

In another possible implementation, the memory is located outside the communication apparatus.

In a possible implementation, the communication apparatus further includes a communication interface, and the communication interface is used by the communication apparatus to communicate with another device, for example, to send or receive data and/or a signal.

For example, the communication interface may be a transceiver, a circuit, a bus, a module, or a communication interface of another type.

According to a sixth aspect, a communication apparatus is provided, including a logic circuit and an input/output interface. The input/output interface is configured to: output and/or input a signal, and the logic circuit is configured to: perform the method according to any one of the first aspect or the possible implementations of the first aspect, or perform the method according to any one of the second aspect or the possible implementations of the second aspect.

In a possible implementation, the logic circuit is configured to determine a reference cell and at least one other cell in a first time unit, where the reference cell and the at least one other cell are activated serving cells configured with transmission directions in the first time unit; and the transmission direction of the reference cell collides with a transit direction of a first other cell in the first time unit, at least one of the reference cell and the first other cell is a subband full duplex cell, the subband full duplex cell includes a first subband and a second subband, and the first other cell is any one of the at least one other cell. The logic circuit is further configured to determine the transmission direction of the at least one of the reference cell and the first other cell in the first time unit based on the first subband.

According to a seventh aspect, a computer-readable storage medium is provided, including a computer program or instructions. When the computer program or the instructions are run on a computer, the computer is enabled to perform the method according to any one of the first aspect or the possible implementations of the first aspect, or the computer is enabled to perform the method according to any one of the second aspect or the possible implementations of the second aspect.

According to an eighth aspect, a computer program product is provided, including instructions. When the instructions are run on a computer, the computer is enabled to perform the method according to any one of the first aspect or the possible implementations of the first aspect; or the computer is enabled to perform the method according to any one of the second aspect or the possible implementations of the second aspect.

According to a ninth aspect, an embodiment of this application further provides a terminal device, configured to perform the method in the first aspect and the possible implementations of the first aspect.

According to a tenth aspect, an embodiment of this application further provides a network device, configured to perform the method in the second aspect and the possible implementations of the second aspect.

According to an eleventh aspect, an embodiment of this application further provides a communication system, including the communication apparatus provided in the third aspect and the possible implementations and the communication apparatus provided in the fourth aspect and the possible implementations.

### BRIEF DESCRIPTION OF DRAWINGS

FIG. 1 is a diagram of a communication system 100 applicable to an embodiment of this application;
FIG. 2 is a diagram of subband full duplex;
FIG. 3 is a diagram of a communication method 300 according to an embodiment of this application;
FIG. 4 is a diagram of a communication method 400 according to an embodiment of this application;
FIG. 5 is a block diagram of a communication apparatus 500 according to an embodiment of this application;
FIG. 6 is a block diagram of a communication apparatus 600 according to an embodiment of this application;
FIG. 7 is a block diagram of a communication apparatus 700 according to an embodiment of this application;
FIG. 8 is a block diagram of a communication apparatus 800 according to an embodiment of this application;
FIG. 9 is a block diagram of a communication apparatus 900 according to an embodiment of this application; and
FIG. 10 is a block diagram of a communication apparatus 1000 according to an embodiment of this application.

### DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system or a new radio (new radio, NR) system, a system evolved after 5G such as a 6th generation (6th generation, 6G) system, and a non-terrestrial network (NTN) system such as an inter-satellite communication system and a satellite communication system. The satellite communication system includes a satellite base station and a terminal device. The satellite base station provides a communication service for the terminal device. The satellite base station may also communicate with a ground base station. A satellite may be used as a base station, or may be used as a terminal device. The satellite may be a non-ground base station or a non-ground device such as an unmanned aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario. In addition, a transmission point is not limited. Coordinated multipoint transmission may be performed between macro base stations, between micro base stations, or between a macro base station and a micro base station. The technical solutions in embodiments of this application are applicable to both the FDD system and the TDD system. The technical solutions in embodiments of this application are applicable to a low-frequency scenario (sub 6G), and are also applicable to a high-frequency scenario (above 6 GHz), terahertz, optical communication, and the like. The technical solutions in embodiments of this application are applicable to communication between a network device and a terminal, and are also applicable to communication between network devices, communication between terminals, and communication of an internet of vehicles, an internet of things, an industrial internet, and the like.

The technical solutions in embodiments of this application are also applicable to a scenario in which the terminal is connected to a single base station. The base station connected to the terminal and a core network (core network, CN) connected to the base station are of a same standard. For example, if the CN is a 5G core, the base station corresponds to a 5G base station, the 5G base station is directly connected to the 5G core; or if the CN is a 6G core, the base station is a 6G base station, the 6G base station is directly connected to the 6G core. The technical solutions in embodiments of this application are also applicable to a dual connectivity (dual connectivity, DC) scenario in which the terminal is connected to at least two base stations.

The technical solutions in embodiments of this application may alternatively use a macro1-micro scenario including base stations in different forms in a communication network. For example, the base station may be a satellite, an air balloon station, or an unmanned aerial vehicle station. The technical solutions in embodiments of this application are also applicable to a scenario in which both a wide coverage base station and a small coverage base station exist.

It may be further understood that the technical solutions in embodiments of this application are further applicable to 5.5G, 6G, and a further wireless communication system. Application scenarios include but are not limited to scenarios such as ground cellular communication, an NTN, satellite communication, high altitude communication platform (high altitude platform station, HAPS) communication, vehicle-to-everything (vehicle-to-everything, V2X), integrated access and backhaul (integrated access and backhaul, IAB), and reconfigurable intelligent surface (reconfigurable intelligent surface, RIS) communication.

The terminal in embodiments of this application may be a device having wireless sending and receiving functions, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital processing (personal digital assistant, PDA), customer-premises equipment (customer-premises equipment, CPE), a smart point of sale (point of sale, POS) machine, a handheld device having a wireless communication function, a computing device or another processing device connected to the wireless modem, a vehicle-mounted device, a communication device carried on a high-altitude aircraft, a wearable device, an unmanned aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in embodiments of this application.

In embodiments of this application, an apparatus configured to implement a function of the terminal device may be a terminal device, or may be an apparatus that can support the terminal device in implementing the function, for example, a chip system. The apparatus may be mounted in the terminal device or used in a matching manner with the terminal device. In embodiments of this application, the chip system may include a chip, or may include a chip and another discrete device.

The network device in embodiments of this application is a device having the wireless transceiver function, and is configured to communicate with the terminal device. An access network device may be a node in a radio access network (radio access network, RAN), and may be referred to as a base station, or may be referred to as a RAN node; may be an evolved NodeB (evolved NodeB, eNB or eNodeB) in LTE; or may be a base station in a 5G network such as a gNodeB (gNB), a base station in a public land mobile network (public land mobile network, PLMN) evolved after 5G, a broadband network gateway (broadband network gateway, BNG), an aggregation switch, a 3rd generation partnership project (3rd generation partnership project, 3GPP) access device, or the like.

The network device in embodiments of this application may further include various forms of base stations, for example, a macro base station, a micro base station (also referred to as a small cell), a relay station, a transmission reception point (transmission reception point, TRP), a transmitting point (transmitting point, TP), a mobile switching center, and a device that undertakes a base station function in device-to-device (device-to-device, D2D), vehicle-to-everything (vehicle-everything, V2X), and machine-to-machine (machine, M2M) communication, and may further include a central unit (central unit, CU) and a distributed unit (distributed unit, DU) in a cloud radio access network (cloud radio access network, C-RAN) system, and a network device in an NTN communication system. This is not specifically limited in embodiments of this application.

In embodiments of this application, an apparatus configured to implement a function of the network device may be the network device, or may be an apparatus that can support the network device in implementing the function, for example, a chip system. The apparatus may be mounted in the network device or used in a matching manner with the network device. In embodiments of this application, the chip system may include a chip, or may include a chip and another discrete device.

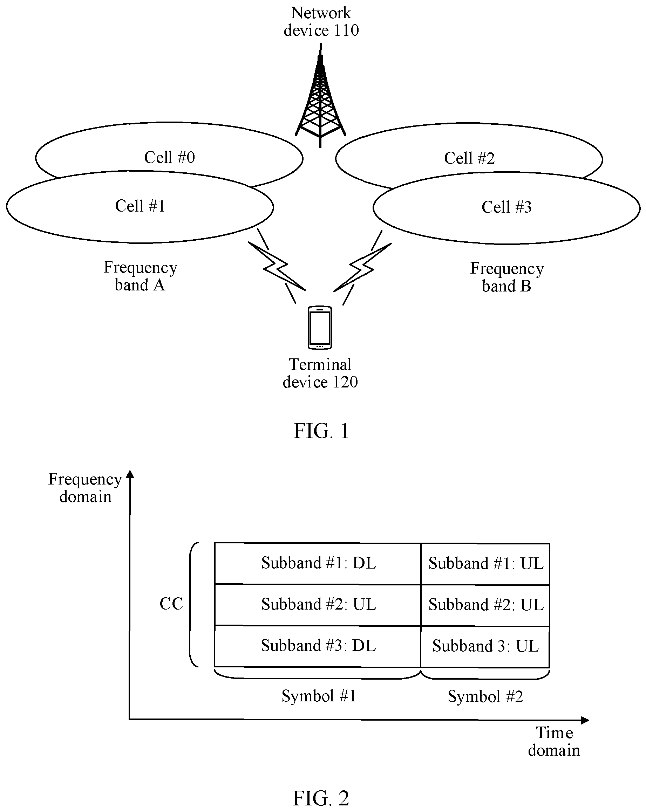

FIG. 1 is a diagram of a communication system 100 applicable to an embodiment of this application. As shown in FIG. 1, a communication system 100 includes a network device 110 and a terminal device 120. The network device 110 may perform uplink communication with the terminal device 120, or may perform downlink communication with the terminal device 120. This is not limited in this embodiment of this application. In addition, the communication system 100 shown in FIG. 1 is merely an example for understanding, and cannot limit the protection scope claimed in this application.

Specifically, the network device 110 may perform uplink/downlink communication with the terminal device 120 via four cells such as a cell #0, a cell #1, a cell #2, and a cell #3. The cell #0 and the cell #1 are located in a frequency band A, and the cell #2 and the cell #3 are located in a frequency band B.

The terminal device 120 aggregates carriers of the foregoing four cells by using a carrier aggregation technology, so that the terminal device 120 obtains a larger communication bandwidth, thereby increasing an uplink/downlink peak rate of the terminal device.

It should be understood that a quantity of terminal devices 120 and a quantity of network devices 110 included in the communication system 100 are not limited in embodiments of this application. The terminal device 120 may be any terminal device listed above, or the network device 110 may be any network device listed above.

The following briefly describes some technical terms related to the technical solutions disclosed in embodiments of this application.

### 1. Carrier aggregation

Carrier aggregation (carrier aggregation, CA) is a technology in which a plurality of component carriers (component carriers, CCs) are aggregated, to obtain a carrier with a larger communication bandwidth.

Specifically, based on frequency bands to which the aggregated CCs belong and whether the aggregated CCs are contiguous in frequency domain, the CA technology may be categorized as follows:
(1) Intra-band contiguous carrier aggregation: The plurality of CCs belong to a same frequency band and are contiguous in frequency domain.
(2) Intra-band non-contiguous carrier aggregation: The plurality of CCs belong to a same frequency band and are non-contiguous in frequency domain.
(3) Inter-band carrier aggregation: The plurality of CCs belong to different frequency bands.

For example, when the cell #1 and the cell #2 belong to the frequency band A, aggregation between the cell #1 and the cell #2 belongs to first-type CA or second-type CA. When the cell #3 and a cell #4 belong to the frequency band B, aggregation between the cell #3 and the cell #4 belongs to first-type CA or second-type CA. When the cell #2 belongs to the frequency band A, and the cell #3 belongs to the frequency band B, aggregation between the cell #2 and the cell #3 belongs to third-type CA.

In a CA scenario, when a secondary component (secondary cell) carrier is configured for the terminal device, both a carrier index of the secondary component carrier and a cell identity (cell identity, Cell ID) of the secondary cell that operates on the secondary component carrier may be carried. In this case, a carrier and a cell are two equivalent concepts. For example, a carrier accessed by the terminal device and a cell accessed by the terminal device are equivalent. A bandwidth of the carrier may be understood as a communication bandwidth of the cell. The plurality of CCs are aggregated, so that a communication bandwidth obtained by the terminal device is a sum of bandwidths of the plurality of CCs, and a peak rate of the terminal device can also be improved.

However, in the CA scenario, in one time unit (for example, on one symbol (symbol)), transmission directions of different CCs may be inconsistent. In this case, directional collision handling (directional collision handling) needs to be performed on the transmission directions of different CCs, to determine a transmission direction of each CC in the time unit. Details are described below.

### 2. Subband full duplex

To overcome a problem of unbalanced frequency domain resource allocation between a downlink (downlink, DL) and an uplink (uplink, UL) in a TDD system (to be specific, a large quantity of frequency domain resources are used for DL transmission, and a small quantity of frequency domain resources are used for UL transmission), a technical solution named subband full duplex (subband full duplex, SBFD) is provided currently. In this solution, one CC may be divided into a plurality of subbands, and transmission directions configured for different subbands may be different. For details, refer to FIG. 2.

FIG. 2 is a diagram of subband full duplex. As shown in FIG. 2, one CC may be divided into three subbands. Specifically, on a symbol #1, transmission directions configured for a subband #1 and a subband #3 are both DL transmission directions, and a transmission direction configured for a subband #2 is a UL transmission direction. On a symbol #2, transmission directions configured for the subband #1, the subband #2, and the subband #3 are all UL transmission directions. Different frequency domain resources may be respectively used in the UL transmission direction and the DL transmission direction. Compared with an original solution in which all frequency domain resources on the symbol #1 are used for DL transmission, this SBFD technical solution can increase resources used for UL transmission, so that a delay of the UL transmission can be effectively reduced.

In addition, different subbands can respectively occupy different frequency domain resources, and frequency domain resources occupied by different subbands do not overlap with each other. For example, a frequency domain resource occupied by the subband #1 is different from a frequency domain resource occupied by the subband #2, and there is no overlapping frequency domain resource.

In addition, on one symbol, when symbol directions of two subbands are different, a specific frequency guard band may exist between the subbands, to reduce interference between signals transmitted in different directions on the two subbands. For example, on the symbol #1, a specific frequency guard band (guard band, GB) GB #1 may exist between the subband #1 and the subband #2, a specific frequency guard band GB #2 may exist between the subband #2 and the subband #3, and the GB #1 and the GB #2 may be of a same value.

### 3. Directional collision handling rule

As described above, in the CA scenario, in one time unit (for example, on one symbol), the transmission directions of the plurality of CCs forming the CA may be inconsistent. In this case, directional collision handling needs to be performed between the plurality of CCs, to determine the transmission direction of each CC in the time unit. For details about the directional collision handling performed between different CCs, refer to the following descriptions.

Specifically, if the UE meets the following conditions:
(1) The UE configures a plurality of activated serving cells (for example, the foregoing cell #1, cell #2, cell #3, and cell #4), and configures a parameter directionalCollisionHandling-r16 = 'enabled' for one or more cells in the plurality of activated serving cells.
(2) The UE supports a half-DuplexTDD-CA-SameSCS-r16 capability.
(3) The UE is not configured to monitor a physical downlink control channel (physical downlink control channel, PDCCH) carrying downlink control information (downlink control information, DCI) 2-0 in any one of the activated serving cells.

The UE may select a serving cell with a smallest cell index value from the activated serving cells as a reference cell (reference cell) in any time unit (the following uses a symbol as an example for description). When the UE supports an inter-band simultaneous transmission and reception capability (simultaneousRxTxInterBandCA), the UE can select a serving cell with a smallest cell index value from the activated serving cells as the reference cell in each frequency band. For example, the UE selects the cell #1 in the frequency band A as a reference cell, and selects the cell #3 in the frequency band B as a reference cell. When the UE does not support the inter-band simultaneous transmission and reception capability, the UE can select a serving cell with a smallest cell index value from all activated serving cells as a reference cell. For example, the UE selects the cell #1 from the cell #1 to the cell #4 as the reference cell.

When the UE supports the inter-band simultaneous transmission and reception capability, it indicates that the UE supports sending in the frequency band A and receiving in the frequency band B simultaneously, and in this case, supports simultaneous transmission and reception in the cell #1 in the frequency band A and the cell #3 in the frequency band B. When the UE does not support the inter-band simultaneous transmission and reception capability, it indicates that the UE does not support sending in the frequency band A and receiving in another frequency band B simultaneously.

In an activated serving cell, a serving cell on one symbol can be used as a reference cell only when at least one of the following conditions is met:
(1) A static configuration is Semi-D/U (tdd-UL-DL-ConfigurationCommon or tdd-UL-DL-ConfigurationDedicated).
(2) The symbol is flexible, and the UE is configured to send a sounding reference signal (sounding reference signal, SRS), a physical uplink control channel (physical uplink control channel, PUCCH), a physical uplink shared channel (physical uplink shared channel, PUSCH), or a physical random access channel (physical random access channel, PRACH) (which may be written as radio resource control-uplink (radio resource control uplink signal, RRC-U)) on the symbol.
(3) The symbol is flexible, and the UE is configured to receive a PDCCH, a physical downlink shared channel (physical downlink shared channel, PDSCH), or a channel state information reference signal (channel state information reference signal, CSI-RS) (which may be written as RRC-D) on the symbol.

In short, a serving cell on one symbol can be a reference cell only when one of the foregoing three conditions is met. The foregoing three conditions may be collectively referred to as a statically configured transmission direction. In addition, the statically configured transmission direction may also be understood as a static transmission direction. The static transmission direction includes a static signal transmission direction (which may be RRC-D/U) and a statically configured symbol direction (which may be Semi-D/U).

The first condition may also be referred to as the statically configured symbol direction (including an uplink direction and a downlink direction), and the second condition and the third condition may be referred to as the static signal transmission direction (including an uplink signal transmission direction and a downlink signal transmission direction).

After the cell #1 is used as the reference cell, the cell #2 to the cell #4 may be referred to as other cells (other cells) of the cell #1. After the cell #1 and the cell #3 are respectively used as the reference cells, the cell #2 may be referred to as other cell of the cell #1, and the cell #4 may be referred to as other cell of the cell #3.

After the reference cell is determined, there may be at least one other cell. For example, when the cell #1 is the reference cell, the other cell may include the cell #2 (the UE does not support the inter-band simultaneous transmission and reception), or the other cells may alternatively include the cell #2 to the cell #4 (the UE supports the inter-band simultaneous transmission and reception).

The other cell may have the statically configured transmission direction, or may not have the statically configured transmission direction. In other words, the other cell may be as follows: A symbol is flexible, and the UE sends or receives a signal (which may be written as Dynamic-U/D) on the symbol as indicated by DCI.

For example, after selecting a reference cell on a symbol #M, the UE may perform directional collision handling based on Semi-D/U, RRC-D/U, and Dynamic-D/U of the reference cell (the reference cell may also be configured with the dynamic signal transmission direction) and other cell configured with a parameter directionalCollisionHandling-r16 = 'enabled' (the parameter may be referred to as a directional collision handling parameter). The other cell may be configured with any one of Semi-D/U, RRC-D/U, and Dynamic-D/U on the symbol #M.

In embodiments of this application, the directional collision handling between the other cell and the reference cell may be understood as collision handling on a transmission direction of the other cell configured with the parameter directionalCollisionHandling-r16 = 'enabled' and the transmission direction of the reference cell in a time unit.

The reference cell may not necessarily be configured with the parameter directionalCollisionHandling-r16 = 'enabled'. In addition, when the transmission directions of the reference cell and the other cell in the time unit (for example, on the symbol #M) are the same, no directional collision handling exists. This is uniformly described herein, and details are not described below again.

For a specific directional collision handling rule, refer to Table 1.

**Table 1**

| Scenario | Reference cell | Other cell | Action |
|---|---|---|---|
| 1 | **Dynamic-D/U** | **Dynamic-U/D** | **Occurrence of this case is not expected** |
| 2 | **Dynamic-D** | **Semi-U/RRC-U** | **Drop sending on the other cell** |
| 3 | **Dynamic-U** | **Semi-D/RRC-D** | **Drop receiving on the other cell** |
| 4 | **Semi-U/RRC-U** | **Dynamic-D** | **Occurrence of this case is not expected** |
| 5-1 | **Semi-D/RRC-D** | **Dynamic-U** | **Inter-band: Semi-D: sending on the other cell RRC-D: receiving on the reference cell is not required** |
| 5-2 | | | **Intra-band: Occurrence of this case is not expected** |
| 6-1 | **Semi-D/U** | **Semi-U/D** | **Inter-band: It is assumed that a symbol is flexibly configured on the other cell** |
| 6-2 | | | **Intra-band: Occurrence of this case** is **not expected** |
| 7 | **Semi-D/U** | **RRC-U/D** | **Drop sending or receiving on the other cell** |
| 8 | **RRC-D/U** | **Semi-U/D** | **It is assumed that a symbol is flexibly configured on the other cell** |
| 9 | **RRC-D/U** | **RRC-U/D** | **Drop sending or receiving on the other cell** |

In Scenario 1, when the transmission direction of the reference cell on the symbol #M is Dynamic-D/U, and the transmission direction of the other cell on the symbol #M is Dynamic-U/D, the UE expects to avoid the occurrence of this case (error case). In Scenario 2, when the transmission direction of the reference cell on the symbol #M is Dynamic-D, and the transmission direction of the other subband on the symbol #M is Semi-U/RRC-U, the UE drops sending on the other cell (drop U on other cell). In Scenario 3, when the transmission direction of the reference cell on the symbol #M is Dynamic-U, and the transmission direction of the other cell on the symbol #M is Semi-D/RRC-D, the UE drops receiving on the other cell (drop D on other cell). In Scenario 4, when the transmission direction of the reference cell on the symbol #M is Semi-U/RRC-U, the transmission direction of the other cell on the symbol #M is Dynamic-D, the UE expects to avoid the occurrence of this case (error case). In Scenario 5-1, the transmission direction of the reference cell on the symbol #M is Semi-D/RRC-D, and the transmission direction of the other cell on the symbol #M is Dynamic-U. If inter-band carrier aggregation is performed, when the transmission direction of the reference cell on the symbol #M is Semi-D, the UE performs sending on the other cell (Tx on other cell); or when the transmission direction of the reference cell on the symbol #M is RRC-D, the UE does not require the receiving on the reference cell (not required to receive on reference cell). In Scenario 5-2, when the transmission direction of the reference cell on the symbol #M is Semi-D/RRC-D, and the transmission direction of the other cell on the symbol #M is Dynamic-U, if intra-band carrier aggregation is performed, the UE expects to avoid the occurrence of this case (error case). In Scenario 6-1, when the transmission direction of the reference cell on the symbol #M is Semi-D/U, and the transmission direction of the other cell on the symbol #M is Semi-U/D, if inter-band carrier aggregation is performed, it is assumed that the symbol is a flexibly configured on the other cell (assume symbol #M as Flexible on the other cell). In Scenario 6-2, when the transmission direction of the reference cell on the symbol #M is Semi-D/U, and the transmission direction of the other cell on the symbol #M is Semi-U/D, if intra-band carrier aggregation is performed, the UE expects to avoid the occurrence of this case (error case). In scenario 7, when the transmission direction of the reference cell on the symbol #M is Semi-D/U, and is RRC-U/D on the other cell, the UE drops sending or receiving on the other cell (drop U/D on other cell). In Scenario 8, when the transmission direction of the reference cell on the symbol #M is RRC-D/U, and the transmission direction of the other cell on the symbol #M is Semi-U/D, the UE assumes that the symbol is a flexibly configured on the other cell (assume symbol #M as Flexible on the other cell), and drops sending RRC-U or receiving RRC-D on the other cell. In scenario 9, when the transmission direction of the reference cell on the symbol #M is RRC-D/U, and the transmission direction of the other cell on the symbol #M is RRC-U/D, the UE drops sending or receiving on the other cell (drop U/D on other cell).

However, the directional collision handling rule shown in Table 1 is applicable to a conventional TDD cell (for example, a legacy TDD cell) in a TDD system. When an SBFD cell exists in the TDD system, the foregoing directional collision handling rule may not be applicable. For details, refer to content shown in Table 2.

**Table 2**

| Cell | Symbol #1 | Symbol #2 | Symbol #3 | Symbol #4 | Symbol #5 |
|---|---|---|---|---|---|
| Subband #1 | Semi-D | RRC-D | RRC-D | Semi-D | F |
| Subband #2 | Semi-D | F | Semi-U | Semi-U | RRC-U |
| Subband #3 | Semi-D | Semi-D | Dynamic-D | Semi-D | F |
| TDD cell | RRC-D | Semi-D | Semi-D/RRC-D | Semi-U | Semi-U |

In Table 2, for the SBFD cell, the transmission direction on the symbol is configured at a subband level. Therefore, when one SBFD cell includes three subbands, the SBFD cell includes three transmission direction configurations. For example, on the symbol #1, the transmission direction of the subband #1 is Semi-D, the transmission direction of the subband #2 is Semi-D, and the transmission direction of the subband #3 is Semi-D. On the symbol #2, the transmission direction of the subband #1 is RRC-D, the transmission direction of the subband #2 is F (flexible), and the transmission direction of the subband #3 is Semi-D. On the symbol #3, the transmission direction of the subband #1 is RRC-D, the transmission direction of the subband #2 is Semi-U, and the transmission direction of the subband #3 is Dynamic-D. On the symbol #4, the transmission direction of the subband #1 is Semi-D, the transmission direction of the subband #2 is Semi-U, and the transmission direction of the subband #3 is Semi-D. On the symbol #5, the transmission direction of the subband #1 is F, the transmission direction of the subband #2 is RRC-U, and the transmission direction of the subband #3 is F.

For the legacy TDD cell, the transmission direction on the symbol is configured at a cell level, and the legacy TDD cell only has one transmission direction configuration. For example, on the symbol #1, the transmission direction is RRC-D. On the symbol #2, the transmission direction is Semi-D. On the symbol #3, the transmission direction is Semi-D/RRC-D. On the symbol #4, the transmission direction is Semi-U. On the symbol #5, the transmission direction is Semi-U.

It can be learned from comparison between the two that, for the SBFD cell, on the symbol #3, if the transmission direction of the subband #3 is Dynamic-D, the transmission direction of the subband #2 is Semi-U, and the transmission direction of the subband #1 is RRC-D, the UE may perform Dynamic-D and RRC-D. For the legacy TDD cell, on the symbol #3, if the transmission direction is Semi-U, configured RRC-D is dropped (drop), and the UE does not expect to configure Dynamic-D (an uplink priority is higher than a downlink priority).

Because the transmission directions of the two subbands of the SBFD cell may be inconsistent, when directional collision handling needs to be performed between a legacy TDD cell and each of the two subbands in the SBFD cell, some problems may exist. For details, refer to Table 3 and Table 4.

**Table 3**

| Scenario | Reference cell | Other cell | Action |
|---|---|---|---|
| a | Subband #1: Dynamic-D/U; RRC-D/U | Dynamic-D/U | Rx/Tx Dynamic-D/U; Rx/Tx RRC-D/U |
| | | | Intra-band: Occurrence of this case is not expected |
| b | Subband #2 Semi-U/D | Semi-D/U | Rx/Tx Dynamic-D/U; Rx/Tx RRC-D/U |
| | | | Intra-band: Occurrence of this case is not expected |
| c | | RRC-D/U | Rx/Tx Dynamic-D/U; Rx/Tx RRC-D/U |
| | | | Drop RRC-D/U on the other cell |
| d | Semi-D/U | Subband #1: Dynamic-D/U; RRC-D/U | Rx/Tx Dynamic-D/U; Rx/Tx RRC-D/U |
| | | Subband #2 Semi-U/D | Intra-band: Occurrence of this case is not expected |

In Table 3, the transmission directions of the two subbands of the SBFD cell are opposite, and the transmission direction of the legacy TDD cell is the same as the transmission direction of the subband #1. For example, in Scenarios a to c, the reference cell is the SBFD cell, the other cell is the legacy TDD cell, the transmission direction of the subband #1 on the symbol #M is Dynamic-D/U or RRC-D/U, the transmission direction of the subband #2 on the symbol #M is Semi-U/D, the transmission direction of the legacy TDD cell on the symbol #M is Dynamic-D/U, Semi-D/U, or RRC-D/U, and the transmission direction is the same as the transmission direction of the subband #1 on the symbol #M, and is opposite to the transmission direction of the subband #2 on the symbol #M. In Scenario d, the reference cell is the legacy TDD cell, the other cell is the SBFD cell, the transmission direction of the legacy TDD cell on the symbol #M is Semi-D/U, the transmission direction of the subband #1 in the SBFD cell on the symbol #M is Dynamic-D/U or RRC-D/U, the transmission direction of the subband #2 on the symbol #M is Semi-U/D, the transmission direction of the subband #1 on the symbol #M is the same as the transmission direction of the legacy TDD cell on the symbol #M, and the transmission direction of the subband #2 on the symbol #M is opposite to the transmission direction of the legacy TDD cell on the symbol #M.

**Table 4**

| Scenario | Reference cell | Other cell | Action |
|---|---|---|---|
| e | Subband #1: Semi-D/U | Dynamic-D/U | Rx/Tx Dynamic-D/U; Rx/Tx RRC-D/U |
| | | | Intra-band: Occurrence of this case is not expected |
| f | | Semi-D/U | - |
| | Subband #2: Semi-U/D | | Intra-band: Occurrence of this case is not expected |
| g | | RRC-D/U | Rx/Tx RRC-D/U |
| | | | Drop RRC-D/U on the other cell |
| h | Semi-D/U | Subband #1: Semi-D/U | - |
| | | Subband #2: Semi-U/D | Intra-band: Occurrence of this case is not expected |

In Table 4, the transmission directions of the two subbands of the SBFD cell are opposite, and the transmission direction of the legacy TDD cell is the same as the transmission direction of the subband #1. For example, in Scenarios e to g, the reference cell is the SBFD cell, the other cell is the legacy TDD cell, the transmission direction of the subband #1 on the symbol #M is Semi-D/U, the transmission direction of the subband #2 on the symbol #M is Semi-U/D, the transmission direction of the legacy TDD cell on the symbol #M is respectively Dynamic-D/U, Semi-D/U, or RRC-D/U, and the transmission direction is the same as the transmission direction of the subband #1 on the symbol #M, and is opposite to the transmission direction of the subband #2 on the symbol #M. In Scenario h, the reference cell is the legacy TDD cell, the other cell is the SBFD cell, the transmission direction of the legacy TDD cell on the symbol #M is Semi-D/U, the transmission direction of the subband #1 in the SBFD cell on the symbol #M is Semi-D/U, the transmission direction of the subband #2 on the symbol #M is Semi-U/D, the transmission direction of the subband #1 on the symbol #M is the same as the transmission direction of the legacy TDD cell on the symbol #M, and the transmission direction of the subband #2 on the symbol #M is opposite to the transmission direction of the legacy TDD cell on the symbol #M.

In this case, when comparison between each of the transmission directions of the two subbands of the SBFD cell on the symbol #M and the transmission direction of the legacy TDD cell on the symbol #M is performed, the following two problems exist.

### Problem 1:

(1) The transmission direction of the legacy TDD cell on the symbol #M is the same as the transmission direction of the subband #1 in the SBFD cell on the symbol #M.
   (a) Signals in both the legacy TDD cell and the SBFD cell cannot be transmitted, that is, Dynamic-D/U signals cannot be transmitted (Scenario a).
   (b) A signal in the legacy TDD cell cannot be transmitted, that is, receiving/sending of an RRC-D/U signal is dropped (Scenario c).
(2) The transmission direction of the legacy TDD cell on the symbol #M is the same as the transmission direction of the subband #1 in the SBFD cell on the symbol #M, but a signal in the legacy TDD cell cannot be transmitted, that is, receiving/sending of an RRC-D/U signal is dropped (Scenario g), and a Dynamic-D/U signal cannot be transmitted (Scenario e).

### Problem 2:

(1) The transmission direction of the subband #2 of the SBFD cell on the symbol #M is opposite to the transmission direction of the subband #1 on the symbol #M, and the transmission direction of the legacy TDD cell on the symbol #M is the same as the transmission direction of the subband #1 in the SBFD cell on the symbol #M, but a signal on the subband #1 in the SBFD cell still cannot be transmitted (Scenario b and Scenario d).
(2) When the transmission direction of the legacy TDD cell on the symbol #M is Semi-D or Semi-U, the UE does not expect occurrence of this case (which is an error case) (Scenario f and Scenario h).

In conclusion, the existing directional collision handling rule is applicable to a scenario in which cells corresponding to component carriers are all conventional time division duplex cells in a time division duplex system, but is not applicable to a scenario in which the cells corresponding to the component carriers include a subband full duplex cell.

In view of the foregoing technical problems, this application provides a communication method and a communication apparatus, and can resolve inconsistent transmission directions of different component carriers when cells corresponding to the component carriers include a subband full duplex cell.

The following describes a communication method and a communication apparatus in embodiments of this application with reference to the accompanying drawings.

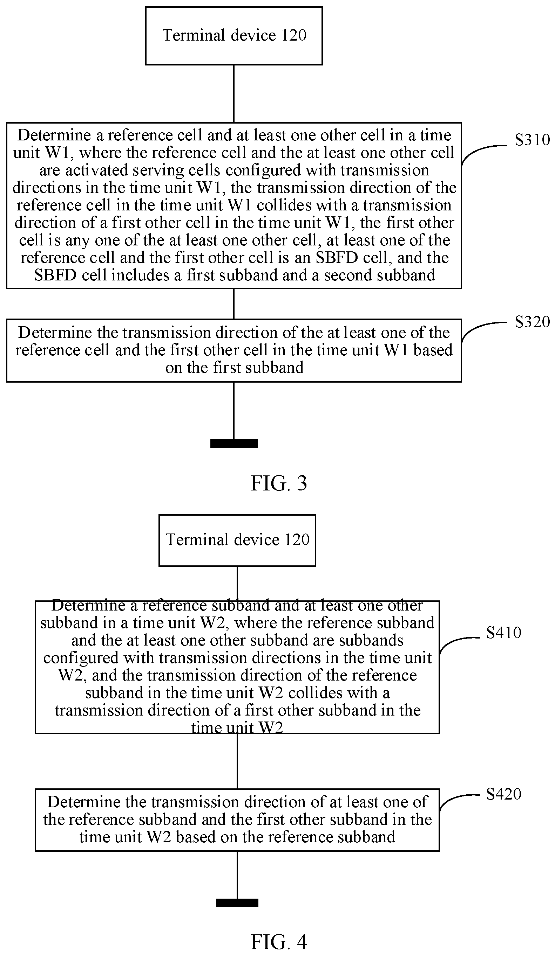

FIG. 3 is an interaction flowchart of a communication method 300 according to an embodiment of this application. A method procedure in FIG. 3 may be performed by a terminal device 120, or may be performed by a module and/or a device (for example, a chip or an integrated circuit) that have/has a corresponding function and that are/is mounted in the terminal device 120. This is not limited in this embodiment of this application. The following uses the terminal device 120 as an example for description. As shown in FIG. 3, the communication method 300 includes the following steps.

S310: The terminal device 120 determines that a reference cell and at least one other cell in a time unit W1, where the reference cell and the at least one other cell are activated serving cells configured with transmission directions in the time unit W1, the transmission direction of the reference cell in the time unit W1 collides with a transmission direction of a first other cell in the time unit W1, the first other cell is any one of the at least one other cell, at least one of the reference cell and the first other cell is an SBFD cell, and the SBFD cell includes a first subband and a second subband.

Specifically, the terminal device 120 may determine the reference cell and the at least one other cell in the time unit W1. Both the reference cell and the at least one other cell are the activated serving cells configured with the transmission directions in the time unit W1.

More specifically, a plurality of activated serving cells may be included in one time unit. One of the plurality of activated serving cells may be used as a reference cell, and all cells other than the reference cell may be used as other cells.

In a time unit (for example, the time unit W1), transmission directions of a reference cell and at least one other cell may collide in the time unit. For ease of description, this embodiment of this application is described only by using an example in which the transmission directions of the reference cell and the first other cell of the at least one other cell collide in the time unit W1, but does not constitute a limitation on a scenario in which the transmission direction of the reference cell collides with a transmission direction of a second other cell of the at least one other cell in the time unit W1.

In a possible implementation, the first other cell is other cell configured with a directional collision handling parameter, and the directional collision handling parameter is used by the terminal device to determine that the first other cell can participate in directional collision handling. For example, when determining that the transmission direction of the first other cell in the time unit W1 collides with the transmission direction of the reference cell in the time unit W1, and determining that the first other cell is configured with the directional collision handling parameter, the terminal device can perform directional collision handling determining on the transmission directions of the first other cell and the reference cell in the time unit W1. In other words, the terminal device 120 can determine, based on the parameter, to perform directional collision handling on the transmission directions of the first other cell and the reference cell in the time unit W1.

Specifically, the first other cell is the other cell configured with the directional collision handling parameter in the at least one other cell. The directional collision handling parameter may be the foregoing parameter "directionalCollisionHandling-r16 = 'enabled'". The parameter can be used by the terminal device 120 to perform directional collision handling on the transmission directions of the first other cell and the reference cell in the time unit W1 when the transmission directions of the first other cell and the reference cell collide in the time unit W1, to determine the respective transmission directions of the first other cell and the reference cell in the time unit W1.

Optionally, the first other cell may be other cell not configured with a directional collision handling parameter, and the terminal device may directly perform directional collision handling determining on the transmission directions of the first other cell and the reference cell in the time unit W1.

For ease of description, this embodiment of this application is described by using an example in which the transmission directions of the first other cell and the reference cell collide in the time unit W1, but does not constitute a limitation a quantity of other cells that are in the at least one other cell and that collide with the transmission direction of the reference cell in the time unit W1. For example, a second other cell, a third other cell, and the like may be further included, and collide with the transmission direction of the reference cell in the time unit W1.

That the at least one of the reference cell and the first other cell is the SBFD cell may include any one of the following cases: The reference cell is the SBFD cell, and the first other cell is a non-SBFD cell, for example, a legacy TDD cell; the first other cell is the SBFD cell, and the reference cell is a non-SBFD cell, for example, a legacy TDD cell; or the reference cell is a first SBFD cell, and the first other cell is a second SBFD cell. The first SBFD cell includes a first subband and a second subband, and the second SBFD cell includes a third subband and a fourth subband.

It should be understood that when any one of the reference cell and the first other cell is the SBFD cell (for example, the reference cell is the SBFD cell, or the first other cell is the SBFD cell), the transmission direction of the reference cell in the time unit W1 collides with the transmission direction of the first other cell in the time unit W1, and the SBFD cell includes at least two subbands, in an existing directional collision handling manner, comparison needs to be performed between each subband of the SBFD cell and another cell. For example, when the reference cell is the SBFD cell, directional collision handling needs to be performed on each subband of the SBFD cell and the first other cell. This easily causes the problems shown in Table 3 and Table 4.

For ease of description, this embodiment of this application is described by using an example in which the SBFD cell includes the first subband and the second subband, but does not constitute a limitation on a scenario in which the SBFD cell includes more than two subbands.

That the transmission directions of the reference cell and the first other cell collide in the time unit W1 may be understood as follows: The transmission direction of the reference cell in the time unit W1 is opposite to the transmission direction of the first other cell in the time unit W1. For example, the transmission direction of the reference cell in the time unit W1 is RRC-D/U, and the transmission direction of the first other cell in the time unit W1 is Dynamic-U/D.

In other words, when the reference cell is the SBFD cell, and the first other cell is the legacy TDD cell, or the first other cell is the SBFD cell, and the reference cell is the legacy TDD cell, that the transmission directions of the reference cell and the first other cell collide in the time unit W1 may be understood as follows: A transmission direction of at least one subband of the SBFD cell is opposite to that of the legacy TDD cell in the time unit W1. That both the reference cell and the first other cell are the SBFD cells may be understood as follows: A transmission direction of at least one subband of the reference cell is opposite to that of at least one subband of the first other cell in the time unit W1. For example, a transmission direction of the first subband in the time unit W1 is opposite to a transmission direction of the third subband in the time unit W1.

As described above, after the reference cell is determined, there may be more than one other cell. The reference cell may be a serving cell with a smallest index value in the foregoing activated serving cells, may be a serving cell with a largest index value, or may be any one of the serving cells, or the like. This is not limited in this embodiment of this application. In addition, for selection of the reference cell, refer to the following descriptions. Details are not described herein again.

S320: The terminal device 120 determines the transmission direction of the at least one of the reference cell and the first other cell in the time unit W1 based on the first subband.

Specifically, because the SBFD cell includes the first subband and the second subband, respective transmission directions of the first subband and the second subband in the time unit W1 may be consistent, or may collide. When the respective transmission directions of the first subband and the second subband in the time unit W1 are consistent, in the existing directional collision handling manner, collision determining needs to be separately performed on the transmission directions of the first subband and the second subband and another cell in the time unit W1. This easily causes redundant collision determining. When the respective transmission directions of the first subband and the second subband collide in the time unit W1, in the existing directional collision handling manner, collision determining needs to be separately performed on the transmission directions of the first subband and the second subband and another cell in the time unit W1. This easily causes incorrect collision determining. For example, Scenarios a to d shown in Table 3 and Scenarios e to h shown in Table 4 are described.

In conclusion, the terminal device 120 may determine the transmission direction of the reference cell in the time unit W1 and the transmission direction of the first other cell in the time unit W1 based on the first subband of the SBFD cell (the first subband may be any subband of the SBFD cell). In this way, the foregoing cases can be avoided.

Specifically, that the terminal device 120 determines the transmission direction of the at least one of the reference cell and the first other cell in the time unit W1 based on the first subband may include any one of the following cases:
Case #1: The terminal device 120 determines the transmission direction of the reference cell in the time unit W1 based on the first subband.
Case #2: The terminal device 120 determines the transmission direction of the first other cell in the time unit W1 based on the first subband.
Case #3: The terminal device 120 determines the transmission directions of the reference cell and the first other cell in the time unit W1 based on the first subband.

For Case #1, when the reference cell is the SBFD cell, the transmission direction of the first subband may be the transmission direction of the SBFD cell in the time unit W1. Then, the terminal device 120 may drop the transmission direction of the first other cell in the time unit W1 (which may be understood as that the transmission direction of the first other cell in the time unit W1 is none).

For Case #2, when the first other cell is the SBFD cell, the transmission direction of the first subband may be the transmission direction of the first other cell in the time unit W1. Optionally, the terminal device 120 may drop the transmission direction of the reference cell in the time unit W1 (which may be understood as that the transmission direction of the reference cell in the time unit W1 is none).

For Case #3, for example, if the reference cell is the SBFD cell, the transmission direction of the reference cell in the time unit W1 is determined, and the terminal device 120 may drop the transmission direction of the first other cell in the time unit W1. In this way, the transmission direction of the first other cell in the time unit W1 is also determined.

When the reference cell is the first SBFD cell, the first SBFD cell includes the first subband and the second subband, the first other cell is the second SBFD cell, and the second SBFD cell includes the third subband and the fourth subband, the terminal device 120 may first determine the first subband of the first SBFD cell, determine the third subband of the second SBFD cell, and determine the transmission direction of the at least one of the reference cell and the first other cell in the time unit W1 based on the first subband and the third subband. For example, the terminal device 120 may maintain the transmission direction of the reference cell in the time unit W1, and drop the transmission direction of the first other cell in the time unit W1, or the terminal device 120 may maintain the transmission direction of the first other cell in the time unit W1, and drop the transmission direction of the reference cell in the time unit W1.

According to the foregoing technical solutions, this application can resolve inconsistent transmission directions of different component carriers when cells corresponding to the component carriers include a subband full duplex cell.

Specifically, when the cells corresponding to the component carriers include the SBFD cell, and the SBFD cell includes at least two subbands, the terminal device may determine a first subband of the SBFD cell, and determine transmission directions of a reference cell and other cell in the time unit based on the first subband.

In a possible implementation, a transmission direction of the first subband in the time unit W1 collides with a transmission direction of the second subband in the time unit W1.

Specifically, when the transmission directions of the first subband and the second subband collide in the time unit W1, in this application, the first subband in the first subband and the second subband is selected to determine the transmission directions of the reference cell and the first other cell in the time unit W1. This can avoid an increase in incorrect determining cases caused by two completely different collision determining results obtained due to the collision between the transmission directions of the first subband and the second subband in the time unit W1, thereby effectively resolving the inconsistent transmission directions of different component carriers when the cells corresponding to the component carriers include the subband full duplex cell.

In a possible implementation, the transmission direction may include at least one of the following:
a signal transmission direction or a statically configured symbol direction.

Specifically, the signal transmission direction may include a dynamic signal transmission direction and a static signal transmission direction. For example, the dynamic signal transmission direction may be the dynamic D/U; and the static signal transmission direction may be RRC-D/U. The statically configured symbol direction may be Semi-D/U.

Specifically, the at least one other cell may be configured with any one of the static signal transmission direction, the dynamic signal transmission direction, and the statically configured symbol direction in the time unit W1, and the reference cell may be configured with the any one of the static signal transmission direction, the dynamic signal transmission direction, and the statically configured symbol direction in the time unit W1.

In a possible implementation, the reference cell is an activated serving cell configured with a static transmission direction in the time unit W1.

Specifically, the reference cell may be configured with one or more of RRC-D/U and Semi-D/U in the time unit W. For example, the reference cell is configured with RRC-D/U in the time unit W1; the reference cell is configured with Semi-D/U in the time unit W1; or the reference cell is configured with RRC-D/U, Semi-D/U, and the like in the time unit W1.

In this way, it can be avoided that selection of the reference cell changes with transmission of a dynamic signal. The terminal device may determine the reference cell in the time unit W1 in advance, to avoid that the terminal device and the cell have inconsistent understandings of the reference cell due to a failure to receive the dynamic signal.

In conclusion, RRC-D/U and Semi-D/U may belong to one of static transmission directions.

As described above, that the at least one other cell is the activated serving cell configured with the transmission direction in the time unit W1 may include at least one of the following cases: The at least one other cell is configured with one or more of RRC-D/U, Dynamic-D/U, and Semi-D/U in the time unit W1. This is not limited in this embodiment of this application.

Optionally, that the reference cell is the activated serving cell configured with the transmission direction in the time unit W1 may also include a case: The reference cell is configured with Dynamic-D/U in the time unit W1.

In a possible implementation, the first subband meets at least one of the following conditions:
(a) The first subband is configured with a signal transmission direction in the time unit W1, and the second subband is not configured with a signal transmission direction in the time unit W1, where the signal transmission direction of the first subband in the time unit W1 collides with a statically configured symbol direction of the second subband in the time unit W1.
(b) The first subband is configured with the signal transmission direction in the time unit W1, the second subband is configured with the signal transmission direction in the time unit W1, and the signal transmission direction of the first subband in the time unit W1 is consistent with a final signal transmission direction of the SBFD cell, where the signal transmission direction of the first subband in the time unit W1 collides with the signal transmission direction of the second subband in the time unit W1.
(c) The first subband is configured with a statically configured symbol direction in the time unit W1, the second subband is configured with the statically configured symbol direction in the time unit W1, the first subband is not configured with the signal transmission direction in the time unit W1, the second subband is not configured with the signal transmission direction in the time unit W1, and an identity of the first subband is less than or greater than an identity of the second subband, or the statically configured symbol direction of the first subband in the time unit W1 is an uplink or a downlink, where the statically configured symbol direction of the first subband in the time unit W1 collides with the statically configured symbol direction of the second subband in the time unit W1.

For Condition a, for example, the signal transmission direction of the first subband in the time unit W1 is Dynamic-D/U, and the statically configured symbol direction of the second subband in the time unit W1 is Semi-U/D. For Condition b, for example, the signal transmission direction of the first subband in the time unit W1 is Dynamic-D/U, and the signal transmission direction of the second subband in the time unit W1 is RRC-U/D. For Condition c, for example, the statically configured symbol direction of the first subband in the time unit W1 is Semi-D/U, and the statically configured symbol direction of the second subband in the time unit W1 is Semi-U/D. For details, refer to Table 5.

In addition, for Condition c, the identity (ID) of the first subband may be less than or greater than the identity of the second subband.

Optionally, if the transmission direction of the first subband in the time unit W1 is an uplink direction or a downlink direction, and the transmission direction of the second subband in the time unit W1 is a downlink direction or an uplink direction, the terminal device may select the first subband to determine the transmission direction of the at least one of the reference cell and the first other cell in the time unit W1.

In other words, the first subband is configured with a statically configured symbol direction in the time unit W1, the second subband is configured with the statically configured symbol direction in the time unit W1, the first subband is not configured with the signal transmission direction in the time unit W1, the second subband is not configured with the signal transmission direction in the time unit W1, and an identity of the first subband is less than or greater than an identity of the second subband, or the statically configured symbol direction of the first subband in the time unit W1 is an uplink or a downlink, where the statically configured symbol direction of the first subband in the time unit W1 collides with the statically configured symbol direction of the second subband in the time unit W1.

**Table 5**

| Scenario | First subband | Second subband |
|---|---|---|
| #1 | Dynamic-D/U | Semi-U/D |
| #2 | RRC-D/U | Semi-U/D |
| #3 | Dynamic-D/U | RRC-U/D |
| #4 | RRC-D/U | Dynamic-U/D |
| #5 | Semi-D/U | Semi-U/D |
| #6 | SSB | RRC-U/Dynamic-U |

In Table 5, in Scenario #1, the transmission direction of the first subband in the time unit W1 is Dynamic-D/U, and the transmission direction of the second subband in the time unit W1 is Semi-U/D. In Scenario #2, the transmission direction of the first subband in the time unit W1 is RRC-D/U, and the transmission direction of the second subband in the time unit W1 is Semi-U/D. In Scenario #3, the transmission direction of the first subband in the time unit W1 is Dynamic-D/U, and the transmission direction of the second subband in the time unit W1 is RRC-U/D. In Scenario #4, the transmission direction of the first subband in the time unit W1 is RRC-D/U, and the transmission direction of the second subband in the time unit W1 is Dynamic-U/D. In Scenario #5, the transmission direction of the first subband in the time unit W1 is Semi-D/U, and the transmission direction of the second subband in the time unit W1 is Semi-U/D. In Scenario #6, the signal transmission direction of the first subband in the time unit W1 is a transmission direction of a synchronization signal block and physical broadcast signal block (synchronization signal block and physical broadcast signal block, SSB), and the transmission direction of the second subband in the time unit W1 is RRC-U/Dynamic-U. It should be understood that RRC-D in the foregoing scenarios 1 to 5 may not include the SSB.

It should be understood that the final signal transmission direction of the SBFD cell may be determined by using the following examples:
(a) The transmission direction configured for the first subband in the time unit W1 is Dynamic-D, and the transmission direction configured for the second subband in the time unit W1 is RRC-U. The terminal device determines that the final signal transmission direction of the SBFD cell is a downlink transmission direction. Therefore, the terminal device selects the first subband to determine the transmission direction of the at least one of the reference cell and the first other cell in the time unit W1.
(b) The transmission direction configured for the first subband in the time unit W1 is Dynamic-U, and the transmission direction configured for the second subband in the time unit W1 is RRC-D. The terminal device determines that the final signal transmission direction of the SBFD cell is an uplink transmission direction. Therefore, the terminal device selects the first subband to determine the transmission direction of at least one of the reference cell and the first other cell in the time unit W1.
(c) The transmission direction configured for the first subband in the time unit W1 is the transmission direction of the SSB, and the transmission direction configured for the second subband in the time unit W1 is RRC-U/Dynamic-U. The terminal device determines that the final signal transmission direction of the SBFD cell is a downlink transmission direction. Therefore, the terminal device selects the first subband to determine the transmission direction of at least one of the reference cell and the first other cell in the time unit W1.

(a), (b), and (c) are examples of collision handling within the SBFD cell. Specifically, the collision handling within the SBFD cell is subject to a final protocol. This is not limited in this embodiment of this application.

In a possible implementation, a plurality of scenarios listed above may be combined with each other. For example, when the transmission directions of the second subband in the time unit W1 are RRC-D and Semi-D, and the transmission directions of the first subband in the time unit W1 are Dynamic-U and Semi-U, the terminal device 120 may select the first subband to determine the transmission directions of the reference cell and the first other cell in the time unit W1.

In this way, an increase in incorrect determining cases caused by two completely different collision determining results obtained due to the collision between the transmission directions of the first subband and the second subband in the time unit W1 can be avoided. In this way, when one or both of the reference cell and the first other cell is/are the SBFD cell/the SBFD cells, a problem of transmission direction collision determining can be effectively resolved.

Optionally, the terminal device 120 may not select the statically configured symbol direction of the first subband or the second subband to determine the transmission directions of the reference cell and the first other cell in the time unit W1.

In a possible implementation, the terminal device 120 may determine the first subband based on one of the foregoing three conditions.

When the SBFD cell meets any one of Scenarios shown in Table 5, the terminal device 120 may determine the transmission directions of the reference cell and the first other cell in the time unit W1 based on the first subband.

In a possible implementation, when the signal transmission direction of the first subband in the time unit W1 collides with the signal transmission direction of the second subband in the time unit W1, the terminal device 120 may first determine the final signal transmission direction of the SBFD cell, and then perform directional collision handling on the subband with a transmission direction that is consistent with the final signal transmission direction of the SBFD cell and the first other cell.

For example, if the signal transmission direction of the first subband in the time unit W1 is RRC-D, the signal transmission direction of the second subband in the time unit W1 is Dynamic-U, and the terminal device 120 determines that the final signal transmission direction of the SBFD cell is Dynamic-U, the terminal device 120 performs transmission directional collision handling on the first subband whose transmission direction is Dynamic-U in the time unit W1 and another cell.

In a possible implementation, when the transmission direction of the first subband in the time unit W1 is the statically configured symbol direction, and the transmission direction of the second subband in the time unit W1 is the statically configured symbol direction, when no signal is transmitted on both the first subband and the second subband, the SBFD cell may not be used as a reference cell or other cell. In this way, the four scenarios listed in Table 4 can also be avoided.

Optionally, if the transmission direction of the first subband in the time unit W1 is the statically configured symbol direction and the signal transmission direction, the transmission direction of the second subband in the time unit W1 is the statically configured symbol direction, there is no signal transmission direction, and the transmission direction of the first subband in the time unit W1 being the statically configured symbol direction collides with the transmission direction of the second subband in the time unit W1 being the statically configured symbol direction, the SBFD cell may be a reference cell or other cell, but directional collision handling is performed only on the subband with the signal transmission direction in the SBFD cell.

That the terminal device 120 determines, by using the first subband, the transmission directions of the reference cell and the first other cell in the time unit W1 is merely used as an example for description, and is intended to describe a case that when transmission directions of any two subbands of the SBFD cell collide in the time unit W1 (a scenario with consistent transmission directions may alternatively be included), the terminal device 120 may determine the transmission directions of the reference cell and the first other cell in the time unit W1 based on one of the subbands of the SBFD cell.

In a possible implementation, when the transmission direction of the first subband in the time unit W1 is consistent with the transmission direction of the second subband in the time unit W1, the terminal device 120 may alternatively determine the transmission directions of the reference cell and the first other cell in the time unit W1 based on the first subband.

In a possible implementation, the time unit W1 may include at least one of the following:
a slot, a symbol, or a mini-slot.

Specifically, when the time unit W1 is the slot, collision determining handling is performed on the foregoing transmission direction collision on the slot (which may be one slot or may be a plurality of slots). When the time unit W1 is the symbol, collision determining handling is performed on the foregoing transmission direction collision on the symbol (which may be one symbol or may be a plurality of symbols). When the time unit W1 is the mini-slot (mini-slot), collision determining handling is performed on the foregoing transmission direction collision on the mini-slot (which may be one mini-slot or may be a plurality of mini-slots).

According to the foregoing technical solutions, this application can resolve a problem of how to resolve the collision between the transmission directions of the reference cell and the first other cell in the time unit when the serving cells corresponding to different component carriers include the SBFD cell.

Specifically, in Scenarios shown in Table 3 and Table 4, when one of the subbands of the SBFD cell is selected to perform transmission direction collision determining handling, the occurrence of the determining scenario in which the error occurs or the signal is dropped can be reduced.

In a possible implementation, at least one of the following constraints can be configured for the SBFD cell:
(1) The statically configured symbol direction (Semi-D/U) of the first subband in the time unit W1 is consistent with the signal transmission direction (RRC-D/U or Dynamic-D/U) of the second subband in the time unit W1.
(2) The statically configured symbol direction (Semi-D/U) of the first subband in the time unit W1 is consistent with the statically configured symbol direction (Semi-D/U) of the second subband in the time unit W1.
(3) A statically configured symbol category of the first subband in the time unit W1 is Semi-F, and a statically configured symbol category of the second subband in the time unit W1 is Semi-F.

In this way, the eight scenarios listed in Table 3 and Table 4 can also be resolved.

Optionally, in the SBFD cell, only the subband configured with the signal transmission direction participates in the directional collision handling. In this way, the eight scenarios listed in Table 3 and Table 4 can also be resolved.

In a possible implementation, before determining the reference cell and the at least one other cell in the time unit W1, the terminal device 120 may receive first indication information sent by a network device. The first indication information indicates at least two activated serving cells configured by the network device 110 for the terminal device 120, and the at least two activated serving cells include at least one of SBFD cells. The following determining of the reference cell and the at least one other cell is determining of the reference cell and the at least one other cell in the time unit W1.

In this way, the terminal device 120 may determine the reference cell and the at least one other cell in the at least two activated serving cells based on the first indication information sent by the network device 110.

Specifically, the terminal device 120 may determine the at least two activated serving cells based on the first indication information, and activated serving cells that are in the at least two activated serving cells and that are configured with static transmission directions in the time unit W1 may form a first cell set. The terminal device 120 determines a first cell in the first cell set as the reference cell. In addition, all remaining cells other than the first cell in the at least two activated serving cells are the other cells. The first cell may be any activated serving cell in the first cell set.

Specifically, the terminal device may select, from the at least two activated serving cells, a cell set that may be used as reference cells, and each cell in the cell set is an activated serving cell configured with the static transmission direction in the first time unit. Then, the terminal device may select any cell from the cell set as the reference cell. In this way, it can be avoided that selection of the reference cell changes with transmission of a dynamic signal. The terminal device may determine the reference cell in the first time unit in advance, to avoid that the terminal device and the cell have inconsistent understandings of the reference cell due to a failure to receive the dynamic signal.

After the terminal device determines the first cell from the cell set as the reference cell, all the cells other than the first cell in the at least two activated serving cells are the other cells.

It should be understood that each of the at least two activated serving cells is configured with a transmission direction in the first time unit.

Optionally, an index value of the first cell is a smallest value in index values of all the cells in the first cell set.

Optionally, when the SBFD cell is the reference cell, the network device 110 may ensure that the transmission direction of the first other cell in the time unit W1 does not collide with the transmission direction of the reference cell in the time unit W1.

Optionally, when at least one SBFD cell in the at least two activated serving cells belongs to the first cell set, each of the at least one of the SBFD cells may be configured with a signal transmission direction in the time unit W1, for example, a static signal transmission direction.

Specifically, in the SBFD cell, symbol direction configurations of a plurality of subbands may be different. In this case, the symbol direction configurations of the subbands cannot represent the transmission direction of the SBFD cell. When a plurality of subbands of the SBFD cell have static symbol direction configurations, configurations of statically configured symbol directions of two subbands are opposite, and no signal is transmitted on the plurality of subbands, it can be avoided that the SBFD cell participates in directional collision handling determining, thereby reducing processing complexity of the terminal. That is, only the SBFD cell with signal transmission participates in the directional collision handling.

In a possible implementation, an index value of the first subband is less than an index value of the second subband. For example, the index value of the first subband is a smallest value in index values of all subbands in the SBFD cell.

In a possible implementation, the terminal device 120 may first send second indication information to the network device 110, where the second indication information indicates whether the terminal device 120 supports an inter-band simultaneous transmission and reception capability.

Specifically, when the second indication information indicates that the terminal device 120 supports the inter-band simultaneous transmission and reception capability, frequency bands to which all the cells in the first cell set are the same, for example, a first frequency band. When the second indication information indicates that the terminal device 120 does not support the inter-band simultaneous transmission and reception capability, all the cells in the first cell set belong to different frequency bands. For example, a frequency band to which some cells belong is a first frequency band, and a frequency band to which some cells belong is a second frequency band.

In conclusion, when the second indication information indicates that the terminal device 120 does not support the inter-band simultaneous transmission and reception capability, frequency bands to which all the cells in the first cell set belong include a first frequency band and a second frequency band, and the second frequency band is different from the first frequency band.

In a possible implementation, the network device 110 configures a plurality of serving cells for the terminal device 120.

Specifically, the terminal device 120 may perform cell access. A cell in which the terminal device 120 perform initial access is a primary cell (primary cell, PCell).

Specifically, the network device 110 may establish a CA frequency set through manual configuration, and the CA frequency set includes a plurality of frequencies. Cells corresponding to these frequencies are candidate cells (secondary cells, SCells). The network device 110 may determine, based on the candidate cells and a capability of the terminal device 120, candidate cells that need to be added for the terminal device, and send related information of these candidate cells to the terminal device 120 by using an RRC reconfiguration message. The terminal device 120 may add the corresponding candidate cells based on the related information of the candidate cells. There are two manners of configuring the candidate cells for the terminal device 120 during specific addition: a blind configuration and a measurement-based configuration.

When the blind configuration is used, the terminal device 120 directly configures the candidate cells based on the related information that is of the candidate cells and that is delivered by the network device 110. When the measurement-based configuration is used, the terminal device 120 needs to consider signal quality of the cells. The cells can be configured as the candidate cells only when the signal quality of the cells meet a specific condition.

When adding the candidate cells, the terminal device 120 performs a configuration by using radio resource control configuration (radio resource control reconfiguration, RRCReconfiguration) information. RRC signaling may include a higher layer configuration CellGroupConfig IE, where the CellGroupConfig IE includes an sCell set (sCellToAddModList), and each sCell in the sCell set is configured through SCellConfig. When the SCellConfig configuration includes a configuration sCellState-r16 ENUMERATED{activated}, namely, sCellState-r16, the candidate cells are configured as activated serving cells. After the candidate cells are initially configured, the terminal device 120 or the network device 110 may subsequently activate/deactivate the candidate cells by using a MAC CE.

In addition, the network device 110 can determine time at which the candidate cells become an activated state. The network device 110 may determine, based on an amount of services of the terminal device 120, whether to activate the candidate cells. When the amount of the services to be transmitted by the terminal device 120 is large, the network device 110 activates the candidate cells. The primary cell accessed by the terminal device 120 may be always in an activated state.

In a possible implementation, the SBFD cell may not be used as a reference cell, but is only used as other cell. In this way, the foregoing collision problem can also be resolved.

In a possible implementation, directionalCollisionHandling-r16 = 'enabled' cannot be configured for an SBFD cell. That is, the network device 110 needs to ensure that no direction collision occurs in a cell in CA that cannot perform simultaneous transmission and reception with the SBFD cell. In this way, the foregoing collision problem can also be resolved.

The communication method shown in FIG. 3 may alternatively be performed by the network device 110, and steps performed by the network device 110 are basically the same as steps performed by the terminal device 120. For details, refer to the foregoing content. Details are not described again.

In a possible implementation, before the terminal device 120 sends the second indication information to the network device 110, the network device 110 may send terminal device capability request information (for example, terminal device capability query signaling) to the terminal device 120, where the capability request information is for requesting to query a capability of the terminal device 120.

Correspondingly, the terminal device 120 may send terminal device capability feedback information (for example, terminal device capability signaling) to the network device 110, where the terminal device capability feedback information is used to feed back the capability of the terminal device 120 to the network device 110.

Specifically, the terminal device capability feedback information may include a CA capability of the terminal device 120, and may further include information such as a frequency band combination supported by the terminal device 120 and whether an inter-band simultaneous transmission and reception capability is supported.

In a possible implementation, the network device 110 may configure a plurality of serving cells for the terminal device 120 based on a terminal device capability fed back by the terminal device 120.

Specifically, the network device 110 may configure the plurality of serving cells for the terminal device 120 based on the capability reported by the terminal device 120, and the plurality of serving cells may be distributed on the frequency band combination supported by the terminal device 120.

In a possible implementation, the network device 110 may further activate, for the terminal device 120, one or more serving cells configured by the network device 110 for the terminal device 120.

Correspondingly, the terminal device 120 may determine a reference cell and at least one other cell from the activated serving cells.

The following describes another communication method in embodiments of this application with reference to the accompanying drawings.

FIG. 4 is an interaction flowchart of a communication method 400 according to an embodiment of this application. A method procedure in FIG. 4 may be performed by a terminal device 120, or may be performed by a module and/or a device (for example, a chip or an integrated circuit) that have/has a corresponding function and that are/is mounted in the terminal device 120. This is not limited in this embodiment of this application. The following uses the terminal device 120 as an example for description. As shown in FIG. 4, the communication method 400 includes the following steps.

S410: The terminal device 120 determines a reference subband and at least one other subband in a time unit W2, where the reference subband and the at least one other subband are subbands configured with transmission directions in the time unit W2, and the transmission direction of the reference subband in the time unit W2 collides with a transmission direction of a first other subband in the time unit W2.

Specifically, the terminal device 120 may determine the reference subband (reference subband) and the at least one other subband (other subband) in the time unit W2. The reference subband and the at least one other subband are the subbands configured with the transmission directions in the time unit W2.

More specifically, a plurality of subbands may be included in one time unit. One of the plurality of subbands may be used as a reference subband, and all subbands other than the reference subband may be used as other subbands.

In a time unit (for example, the time unit W2), transmission directions of a reference subband and at least one other subband may collide in the time unit. For ease of description, this embodiment of this application is described only by using an example in which the transmission directions of the reference subband and the first other subband of the at least one other subband collide in the time unit W2, but does not constitute a limitation on a scenario in which the transmission direction of the reference subband collides with a transmission direction of a second other subband of the at least one other subband in the time unit W2.

In a possible implementation, the first other subband is other subband configured with a direction collision handling parameter, and the directional collision handling parameter is used by the terminal device to determine that the first other subband can participate in directional collision handling. For example, when determining that the transmission direction of the first other subband in the time unit W2 collides with the transmission direction of the reference subband in the time unit W2, and determining that the first other subband is configured with the directional collision handling parameter, the terminal device can perform directional collision handling determining on the transmission directions of the first other subband and the reference subband in the time unit W2. In other words, the terminal device can determine, based on the parameter, to perform directional collision handling on the transmission directions of the first other subband and the reference subband in the time unit W2.

Optionally, the first other subband may be other subband not configured with a directional collision handling parameter, and the terminal device may directly perform directional collision handling determining on the transmission directions of the first other subband and the reference subband in the time unit W2.

In a possible implementation, the reference subband and the at least one other subband are SBFD cells; the reference subband is an SBFD cell, and the at least one other subband is a legacy TDD cell; or the reference subband is a legacy TDD cell, and at least one other subband is an SBFD cell. This is not limited in this embodiment of this application.

S420: The terminal device 120 determines the transmission direction of at least one of the reference subband and the first other subband in the time unit W2 based on the reference subband.

Specifically, when the transmission direction of the reference subband in the time unit W2 collides with the transmission direction of the first other subband in the time unit W2, the terminal device may handle the respective transmission directions of the reference subband and the first other subband in the time unit W2 based on the transmission direction of the reference subband in the time unit W2. For descriptions of the transmission direction, refer to the foregoing descriptions. Details are not described herein again.

For example, when a signal transmission direction of the reference subband in the time unit W2 collides with a statically configured symbol direction or a static signal transmission direction of the first other subband in the time unit W2, the terminal device 120 may drop the statically configured symbol direction or the static signal transmission direction of the first other subband in the time unit W2.

For another example, when a statically configured symbol direction of the reference subband in the time unit W2 collides with the transmission direction of the first other subband in the time unit W2, the terminal device 120 may drop the transmission direction of the first other subband in the time unit W2.

For the foregoing two example descriptions, refer to Table 6.

**Table 6**

| Scenario | Reference subband | Other subband | Action |
|---|---|---|---|
| s1 | Dynamic-D/U | Dynamic-U/D | Occurrence of this case is not expected |
| s2 | Dynamic-D | Semi-U/RRC-U | Drop sending on the other subband |
| s3 | Dynamic-U | Semi-D/RRC-D | Drop receiving on the other subband |
| s4 | Semi-D/U | RRC-U/D | Drop sending/receiving on the other subband |
| s5 | RRC-D/U | Semi-U/D | Drop sending/receiving on the other subband |
| s6 | RRC-D/U | RRC-U/D | Drop sending/receiving on the other subband |

In Table 6, in Scenario s1, when the transmission direction of the reference subband on a symbol #M is Dynamic-D/U, and the transmission direction of the other subband on the symbol #M is Dynamic-U/D, the terminal device 120 expects to avoid occurrence of this case (error case). In Scenario s2, when the transmission direction of the reference cell on a symbol #M is Dynamic-D, and the transmission direction of the other subband on the symbol #M is Semi-U/RRC-U, the terminal device 120 drops sending on the other subband (drop U on other subband). In Scenario s3, when the transmission direction of the reference subband on a symbol #M is Dynamic-U, and the transmission direction of the other cell on the symbol #M is Semi-D/RRC-D, the terminal device 120 drops receiving on the other subband (drop D on other subband). In Scenario s4, when the transmission direction of the reference subband on a symbol #M is Semi-D/U, and the transmission direction of the other cell on the symbol #M is RRC-U/D, the terminal device 120 drops sending/receiving on the other subband (drop U/D on other subband). In Scenario s5, when the transmission direction of the reference subband on a symbol #M is RRC-D/U, and the transmission direction of the other subband on the symbol #M is Semi-U/D, the terminal device 120 drops sending/receiving on the other subband (drop U/D on other subband). In Scenario s6, when the transmission direction of the reference subband on a symbol #M is RRC-D/U, and the transmission direction of other subband on the symbol #M is RRC-U/D, the terminal device 120 drops sending/receiving on the other subband (drop U/D on other subband).

According to the foregoing technical solutions, this application can resolve a problem of how to perform handling when the transmission directions of the reference subband and other subband in the same time unit collide.

In a possible implementation, when both the reference subband and the first other subband are the SBFD cells, and the terminal device 120 determines the transmission directions of the reference subband and the first other subband in the time unit W2 based on the reference subband, the terminal device may perform directional collision handling according to a rule shown in Table 7. For details, refer to Table 7.

**Table 7**

| Scenario | Reference subband | Other subband | Action |
|---|---|---|---|
| S1 | Semi-D/U | Dynamic-U/D | Drop sending/receiving on the other subband |
| S2 | Semi-D/U | Semi-U/D | Drop sending/receiving on the other subband |
| S3 | Semi-D/U | RRC-U/D | Drop sending/receiving on the other subband |
| S4 | RRC-D/U | Dynamic-U/D | Drop receiving/sending on the reference subband |
| S5 | RRC-D/U | RRC-U/D | Drop sending/receiving on the other subband |

In Table 7, in Scenario S1, when the transmission direction of the reference subband in the time unit W2 is Semi-D/U, and the transmission direction of the other subband (the first other subband) in the time unit W2 is Dynamic-U/D, the terminal device 120 drops sending/receiving on the other subband (the first other subband) (drop U/D on other subband). In Scenario S2, when the transmission direction of the reference subband in the time unit W2 is Semi-D/U, and the transmission direction of the other subband (the first other subband) in the time unit W2 is Semi-U/D, the terminal device 120 drops sending/receiving on the other subband (drop U/D on other subband). In Scenario S3, when the transmission direction of the reference subband in the time unit W2 is Semi-D/U, and the transmission direction of the other subband (the first other subband) in the time unit W2 is RRC-U/D, the terminal device 120 drops sending/receiving on the other subband (drop U/D on other subband). In Scenario S4, when the transmission direction of the reference subband in the time unit W2 is Semi-D/U, and the transmission direction of the other subband (the first other subband) in the time unit W2 is Dynamic-U/D, the terminal device 120 drops receiving/sending on the reference subband (drop D/U on reference subband). In Scenario S5, when the transmission direction of the reference subband in the time unit W2 is RRC-D/U, and the transmission direction of the other subband (the first other subband) in the time unit W2 is RRC-U/D, the terminal device 120 drops sending/receiving on the other subband (drop U/D on other subband).

Optionally, an index value of the reference subband is a smallest value of index values of all subbands of the SBFD cell or the legacy TDD cell.

Optionally, the index value of the reference subband is a smallest value in index values of all subbands in a subband set configured with a transmission direction.

Specifically, the index value of the reference subband is a smallest value in index values of all subbands in a subband set configured with a static transmission direction. The other subband is a subband other than the reference subband in the at least two activated serving cells.

Optionally, when a transmission direction of any subband of the SBFD cell in the time unit W2 is a dynamic signal transmission direction, transmission directions of remaining subbands in the time unit W2 need to be consistent with the dynamic signal transmission direction. If the transmission directions of the remaining subbands in the time unit W2 are inconsistent with the dynamic signal transmission direction, the transmission directions of the remaining subbands in the time unit W2 may be dropped.

In a possible implementation, before determining the reference subband and the at least one other subband in the time unit W2, the terminal device 120 may receive third indication information sent by a network device 110. The third indication information indicates at least two activated serving cells configured by the network device 110 for the terminal device 120, and the at least two activated serving cells include at least one of SBFD cells.

In this way, the terminal device 120 may determine the reference subband and the at least one other subband in the at least two activated serving cells based on the third indication information sent by the network device 110.

Specifically, the terminal device 120 may determine the at least two activated serving cells based on the third indication information, and determine a first subband set from the at least two activated serving cells, where each subband in the first subband set is a subband that is in the at least two activated serving cells and that is configured with a static transmission direction. The terminal device 120 may determine that a first subband in the first subband set is a reference subband, and all remaining subbands other than the first subband in the subband set (subbands included in the at least two activated serving cells) are other subbands. The first subband may be any subband in the first subband set.

Optionally, a subband that is in the first subband set and that belongs to the SBFD cell is configured with a static signal transmission direction.

Optionally, an index value of the first subband is a smallest value in index values of all subbands in the first subband set.

Optionally, when both the reference subband and the first other subband belong to the SBFD cell, the network device 110 may ensure that a transmission direction of the first other subband in the time unit W2 does not collide with a transmission direction of the reference subband in the time unit W2.

The reference cell may be selected based on the foregoing solutions:
Manner 1: Optionally, when the reference cell is the SBFD cell, an index value of the reference subband is a smallest value in index values of all the subbands in the SBFD cell.
Manner 2: Optionally, when the reference cell is the SBFD cell, a transmission direction of the SBFD cell is obtained according to a collision handling rule in the SBFD cell, and an index value of the reference subband is a smallest value in index values of subbands that are in the SBFD cell and that have a same transmission direction as the SBFD cell.
Manner 3: Optionally, when the reference cell is the legacy TDD cell, the reference subband is a subband corresponding to the legacy TDD cell.

Optionally, when the reference subband is determined in Manner 2, in a possible implementation, both the reference subband and the first other subband belong to the SBFD cell, collision handling is performed on the reference subband and the first other subband according to the collision handling rule in the SBFD cell. Specifically, the collision handling within the SBFD cell is subject to a final protocol. This is not limited in this embodiment of this application.

In a possible implementation, the terminal device 120 may first send fourth indication information to the network device 110, where the fourth indication information indicates whether the terminal device 120 supports an inter-band simultaneous transmission and reception capability.

Specifically, when the fourth indication information indicates that the terminal device 120 supports the inter-band simultaneous transmission and reception capability, all the subbands in the subband set belong to a same frequency band, for example, a third frequency band. When the fourth indication information indicates that the terminal device 120 does not support the inter-band simultaneous transmission and reception capability, all the subbands in the subband set belong to different frequency bands. For example, a frequency band to which some subbands belong is a third frequency band, and a frequency band to which some subbands belong is a fourth frequency band.

In conclusion, when the fourth indication information indicates that the terminal device 120 does not support the inter-band simultaneous transmission and reception capability, the frequency bands to which all the subbands in the subband set belong include the third frequency band and the fourth frequency band, and the fourth frequency band is different from the third frequency band.

The communication method shown in FIG. 4 may alternatively be performed by the network device 110, and steps performed by the network device 110 are basically the same as steps performed by the terminal device 120. For details, refer to the foregoing content. Details are not described again.

The foregoing describes the method embodiments in embodiments of this application, and the following describes corresponding apparatus embodiments.

To implement functions in the methods provided in the foregoing embodiments of this application, the terminal and the network device each may include a hardware structure and/or a software module, and implement the functions in a form of the hardware structure, the software module, or a combination of the hardware structure and the software module. Whether a function in the functions is performed in the form of the hardware structure, the software module, or the combination of the hardware structure and the software module depends on particular applications and design constraint conditions of the technical solutions.

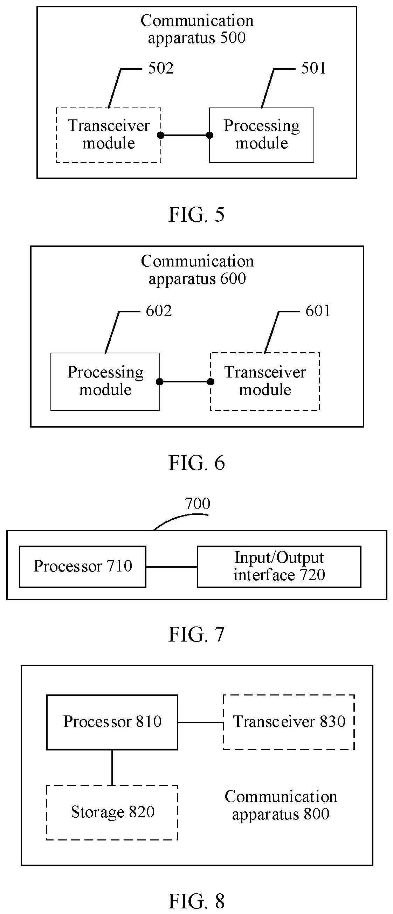

FIG. 5 is a block diagram of a structure of a communication apparatus 500 according to an embodiment of this application. Refer to FIG. 5. The communication apparatus 500 may be configured to perform processes performed by the terminal device 120 in the embodiments shown in FIG. 3 and FIG. 4. For details, refer to related descriptions in the foregoing method embodiments.

The communication apparatus 500 includes a processing module 501 and a transceiver module 502. The transceiver module 502 may implement a corresponding communication function, and the processing module 501 is configured to perform data processing. The transceiver module 502 may also be referred to as a communication interface or a communication module.

Optionally, the communication apparatus 500 may further include a storage module. The storage module may be configured to store instructions and/or data. The processing module 501 may read the instructions and/or the data in the storage module, to enable the communication apparatus to implement the foregoing method embodiments.

The communication apparatus 500 may be configured to perform actions performed by the terminal device in the foregoing method embodiments. The communication apparatus 500 may be the terminal device or a component that may be disposed in the terminal device. The processing module 501 is configured to perform processing-related operations on a side of the terminal device in the foregoing method embodiments. Optionally, the transceiver module 502 is configured to perform a receiving-related operation on the side of the terminal device in the foregoing method embodiments.

Optionally, the transceiver module 502 may include a sending module and a receiving module. The sending module is configured to perform a sending operation in the foregoing method embodiments. The receiving module is configured to perform a receiving operation in the foregoing method embodiments.

It needs to be noted that the communication apparatus 500 may include the sending module but does not include the receiving module. Alternatively, the communication apparatus 500 may include the receiving module but does not include the sending module. This specifically depends on whether the foregoing solution performed by the communication apparatus 500 includes a sending action and a receiving action.

The processing module 501 is configured to determine a reference cell and at least one other cell in a time unit W1, where the reference cell and the at least one other cell are activated serving cells configured with transmission directions in the time unit W1; and when the transmission direction of the reference cell in the time unit W1 collides with a transmission direction of a first other cell in the time unit W1, at least one of the reference cell and the first other cell is an SBFD cell, and the SBFD cell includes a first subband and a second subband.

The processing module 501 is further configured to determine the transmission direction of the at least one of the reference cell and the first other cell in the time unit W1 based on the first subband.

The transceiver module 502 is configured to send second indication information to a network device; or is configured to receive first indication information sent by a network device.

In another possible implementation, the processing module 501 is further configured to determine a reference subband and at least one other subband in a time unit W2, where the reference subband and the at least one other subband are subbands configured with transmission directions in the time unit W2, and the transmission direction of the reference subband in the time unit W2 collides with a transmission direction of a first other subband in the time unit W2.

In another possible implementation, the processing module 501 is further configured to determine the transmission direction of at least one of the reference subband and the first other subband in the time unit W2 based on the reference subband.

The transceiver module 502 is further configured to receive third indication information sent by a network device, where the third indication information indicates at least two activated serving cells configured by the network device for the terminal device, and the at least two activated serving cells include at least one of SBFD cells.

The transceiver module 502 is further configured to send fourth indication information to the network device, where the fourth indication information indicates whether the terminal device supports an inter-band simultaneous transmission and reception capability.

It should be understood that a specific process in which the modules perform the foregoing corresponding processes is described in detail in the foregoing method embodiments. For brevity, details are not described herein again.

The processing module 501 in the foregoing embodiment may be implemented by at least one processor or a processor-related circuit. The transceiver module 502 may be implemented by a transceiver or transceiver-related circuit. The transceiver module 502 may also be referred to as a communication module or a communication interface. The storage module may be implemented by at least one memory.

FIG. 6 is a block diagram of a structure of a communication apparatus 600 according to an embodiment of this application. Refer to FIG. 6. The communication apparatus 600 may be configured to perform processes performed by the network device 110 in the embodiments shown in FIG. 3 and FIG. 4. For details, refer to related descriptions in the foregoing method embodiments.

The communication apparatus 600 includes a transceiver module 601. Optionally, the communication apparatus 600 further includes a processing module 602. The transceiver module 601 may implement a corresponding communication function, and the processing module 602 is configured to perform data processing. The transceiver module 601 may also be referred to as a communication interface or a communication module.

Optionally, the communication apparatus 600 may further include a storage module. The storage module may be configured to store instructions and/or data. The processing module 602 may read the instructions and/or the data in the storage module, to enable the communication apparatus 600 to implement the foregoing method embodiments.

The communication apparatus 600 may be configured to perform actions performed by the network device 110 in the foregoing method embodiments. The communication apparatus 600 may be the network device 110 or a component that may be disposed in the network device 110. The transceiver module 601 is configured to perform a receiving-related operation on a side of the network device 110 in the foregoing method embodiments, and the processing module 602 is configured to perform a processing-related operation on the side of the network device 110 in the foregoing method embodiments.

Optionally, the transceiver module 601 may include a sending module and a receiving module. The sending module is configured to perform a sending operation in the foregoing method embodiments. The receiving module is configured to perform a receiving operation in the foregoing method embodiments.

It needs to be noted that the communication apparatus 600 may include the sending module but does not include the receiving module. Alternatively, the communication apparatus 600 may include the receiving module but does not include the sending module. This specifically depends on whether the foregoing solution performed by the communication apparatus 600 includes a sending action and a receiving action.

The transceiver module 601 is configured to determine a reference cell and at least one other cell in a time unit W1, where the reference cell and the at least one other cell are activated serving cells configured with transmission directions in the time unit W1; and when the transmission direction of the reference cell in the time unit W1 collides with a transmission direction of a first other cell in the time unit W1, at least one of the reference cell and the first other cell is an SBFD cell, and the SBFD cell includes a first subband and a second subband.

The processing module 602 is further configured to determine the transmission direction of the at least one of the reference cell and the first other cell in the time unit W1 based on the first subband.

The transceiver module 601 is configured to send first indication information to a terminal device 120; or is configured to receive second indication information sent by a terminal device 120.

In another possible implementation, the processing module 602 is further configured to determine a reference subband and at least one other subband in a time unit W2, where the reference subband and the at least one other subband are subbands configured with transmission directions in the time unit W2, and the transmission direction of the reference subband in the time unit W2 collides with a transmission direction of a first other subband in the time unit W2.

In another possible implementation, the processing module 602 is further configured to determine the transmission direction of at least one of the reference subband and the first other subband in the time unit W2 based on the reference subband.

The transceiver module 601 is configured to send third indication information to a terminal device 120, where the third indication information indicates at least two activated serving cells configured by the network device 110 for the terminal device 120, and the at least two activated serving cells include at least one of SBFD cells.

The transceiver module 601 is further configured to receive fourth indication information sent by the terminal device, where the fourth indication information indicates whether the terminal device 120 supports an inter-band simultaneous transmission and reception capability.

It should be understood that a specific process in which the modules perform the foregoing corresponding processes is described in detail in the foregoing method embodiments. For brevity, details are not described herein again.

The processing module 501 in the foregoing embodiment may be implemented by at least one processor or a processor-related circuit. The transceiver module 502 may be implemented by a transceiver or transceiver-related circuit. The transceiver module 502 may also be referred to as a communication module or a communication interface. The storage module may be implemented by at least one memory.

FIG. 7 is a block diagram of a structure of a communication apparatus 700 according to an embodiment of this application. The communication apparatus 700 may be configured to implement functions of the network device 110 and the terminal device 120 in the foregoing methods. The communication apparatus 700 may be a chip in the network device 110 or the terminal device 120.

The communication apparatus 700 includes an input/output interface 720 and a processor 710. The input/output interface 720 may be an input/output circuit. The processor 710 may be a signal processor, a chip, or another integrated circuit that can implement the methods in this application. The input/output interface 720 is configured to: input or output a signal or data.

For example, when the communication apparatus 700 is the terminal device 120, the input/output interface 720 is configured to receive first indication information sent by the network device 110. The first indication information indicates at least two activated serving cells configured by the network device 110 for the terminal device 120.

For example, when the communication apparatus 700 is the network device 110, the input/output interface 720 is configured to send first indication information to a terminal device 110. The first indication information indicates at least two activated serving cells configured by the network device 110 for the terminal device 120. The processor 710 is configured to perform some or all of steps in any one of the methods provided in this application.

In a possible implementation, the processor 710 executes instructions stored in a memory, to implement the function implemented by the network device 110 or the terminal device 120.

Optionally, the communication apparatus 700 further includes the memory.

Optionally, the processor and the memory are integrated together.

Optionally, the memory is located outside the communication apparatus 700.

In a possible implementation, the processor 710 may be a logic circuit, and the processor 710 inputs/outputs a message or signaling through the input/output interface 720. The logic circuit may be a signal processor, a chip, or another integrated circuit that can implement the methods in embodiments of this application.

The foregoing descriptions of the apparatus in FIG. 7 are merely an example for description. The apparatus can be configured to perform the methods in the foregoing embodiments. For specific content, refer to descriptions of the foregoing method embodiments. Details are not described herein again.

FIG. 8 is a block diagram of a structure of a communication apparatus 800 according to an embodiment of this application. The communication apparatus 80 includes a processor 810. The processor 810 is coupled to a memory 820. The memory 820 is configured to store a computer program or instructions and/or data. The processor 810 is configured to execute the computer program or the instructions and/or the data stored in the memory 820, so that the methods in the foregoing method embodiments are performed.

Optionally, the communication apparatus 800 includes one or more processors 810.

Optionally, as shown in FIG. 8, the communication apparatus 800 may further include the memory 820.

Optionally, the communication apparatus 800 may include one or more memories 820.

Optionally, the memory 820 may be integrated with the processor 810, or may be disposed separately.

Optionally, as shown in FIG. 8, the communication apparatus 800 may further include a transceiver 830, and the transceiver 830 is configured to: receive and/or send a signal. For example, the processor 810 is configured to control the transceiver 830 to receive and/or send the signal.

In a solution, the communication apparatus 800 is configured to implement operations performed by the network device, the terminal device, or the communication device in the foregoing method embodiments.

For example, the processor 810 is configured to implement processing-related operations performed by the network device, the terminal device, or the communication device in the foregoing method embodiments, and the transceiver 830 is configured to implement receiving and sending-related operations performed by the network device, the terminal device, or the communication device in the foregoing method embodiments.

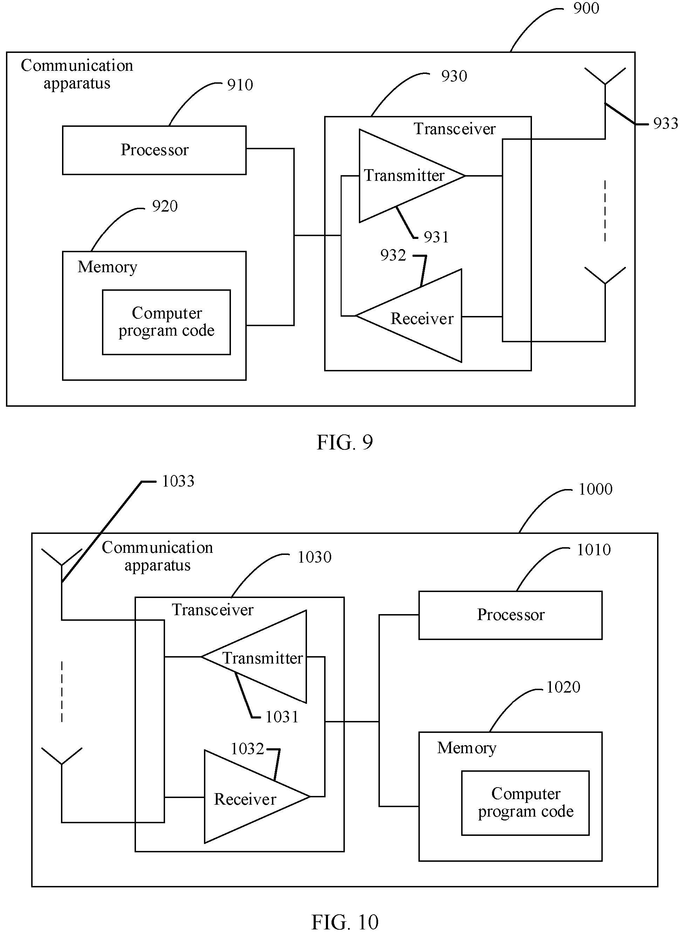

FIG. 9 is a block diagram of a communication apparatus 900 according to an embodiment of this application. The communication apparatus 900 may be a network device 110 or a chip. The communication apparatus 900 may be configured to perform operations performed by the network device 110 in the method embodiments shown in FIG. 3 and FIG. 4.

When being the network device 110, the communication apparatus 900 is, for example, a base station, FIG. 9 is a simplified diagram of a structure of a base station. The base station includes a part 910, a part 920, and a part 930. The part 910 is mainly configured to: perform baseband processing, control the base station, and the like. The part 910 is usually a control center of the base station, may be usually referred to as a processor, and is configured to control the base station to perform a processing operation on a side of the network device in the foregoing method embodiments. The part 920 is mainly configured to store computer program code and data. The part 930 is mainly configured to: receive and send a radio frequency signal and perform conversion between a radio frequency signal and a baseband signal. The part 930 may be usually referred to as a transceiver module, a transceiver device, a transceiver circuit, a transceiver, or the like. The transceiver module in the part 930 may also be referred to as a transceiver device, a transceiver, or the like. The transceiver module includes an antenna 933 and a radio frequency circuit (not shown in the figure). The radio frequency circuit is mainly configured to perform radio frequency processing. Optionally, a device configured to implement a receiving function in the part 930 may be considered as a receiver, and a device configured to implement a sending function may be considered as a transmitter. That is, the part 930 includes the receiver 932 and the transmitter 931. The receiver may also be referred to as a receiving module, a receiver device, a receiver circuit, or the like, and the transmitter may be referred to as a transmitting module, a transmitter device, a transmitter circuit, or the like.

The part 910 and the part 920 may include one or more boards, and each board may include one or more processors and one or more memories. The processor is configured to: read and execute a program in the memory, to implement a baseband processing function and control the base station. If there are a plurality of boards, the boards may be interconnected with each other to enhance a processing capability. **In** an optional implementation, the plurality of boards may share one or more processors, or the plurality of boards share one or more memories, or the plurality of boards simultaneously share one or more processors.

For example, in an implementation, the transceiver module in the part 930 is configured to perform a receiving and sending-related process performed by the network device in the embodiments shown in FIG. 3 and FIG. 4. The processor in the part 910 is configured to perform a processing-related process performed by the network device in the embodiments shown in FIG. 3 and FIG. 4.

In another implementation, the processor in the part 910 is configured to perform a processing-related process performed by the communication device in the embodiments shown in FIG. 3 and FIG. 4.

In another implementation, the transceiver module in the part 930 is configured to perform a receiving and sending-related process performed by the communication device in the embodiments shown in FIG. 3 and FIG. 4.

It should be understood that FIG. 9 is merely an example rather than a limitation, and the foregoing network device including the processor, the memory, and the transceiver may not depend on the structures shown in FIG. 5 to FIG. 8.

When the communication apparatus 900 is the chip, the chip includes a transceiver, a memory, and a processor. The transceiver may be an input/output circuit or a communication interface. The processor is a processor, a microprocessor, or an integrated circuit integrated on the chip. The sending operation of the network device in the foregoing method embodiments may be understood as an output of the chip, and the receiving operation of the network device in the foregoing method embodiments may be understood as an input of a chip.

FIG. 10 is a block diagram of a communication apparatus 1000 according to an embodiment of this application. The communication apparatus 1000 may be a terminal device 120, a processor of the terminal device 110, or a chip. The communication apparatus 1000 may be configured to perform operations performed by the terminal device 120 or the communication device in the foregoing method embodiments.

When the communication apparatus 1000 is the terminal device 120, FIG. 10 is a simplified diagram of a structure of the terminal device 120. As shown in FIG. 10, the terminal device 120 includes a processor, a memory, and a transceiver. The memory may store computer program code. The transceiver includes a transmitter 1031, a receiver 1032, a radio frequency circuit (not shown in the figure), an antenna 1033, and an input/output apparatus (not shown in the figure).

The processor is mainly configured to: process a communication protocol and communication data, control the terminal device 120, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to: receive and send the radio frequency signal in a form of an electromagnetic wave. The input/output apparatus, for example, a touchscreen, a display, or a keyboard, is mainly configured to receive data input by a user and output data to the user. It needs to be noted that some types of terminal devices may not have the input/output apparatus.

When needing to send data, after performing baseband processing on the to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 10 merely shows one memory, one processor, and a transceiver. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver module of the terminal device, and the processor having a processing function may be considered as a processing module of the terminal device.

As shown in FIG. 10, the terminal device includes a processor 1010, a memory 1020, and a transceiver 1030. The processor 1010 may also be referred to as a processing unit, a processing board, a processing module, a processing apparatus, or the like. The transceiver 1030 may also be referred to as a transceiver unit, a transceiver device, a transceiver apparatus, or the like.

Optionally, a device that is in the transceiver 1030 and that is configured to implement a receiving function may be considered as a receiving module, and a device that is in the transceiver 1030 and that is configured to implement a sending function may be considered as a sending module. That is, the transceiver 1030 includes a receiver and a transmitter. The transceiver may also be sometimes referred to as a transceiver device, a transceiver module, a transceiver circuit, or the like. The receiver may also be sometimes referred to as a receiver device, a receiving module, a receiver circuit, or the like. The transmitter may also be sometimes referred to as a transmitter device, a transmitting module, a transmitter circuit, or the like.

For example, in an implementation, the processor 1010 is configured to perform processing actions on a side of the terminal device 120 in the embodiments shown in FIG. 3 and FIG. 4, and the transceiver 1030 is configured to perform receiving and sending actions on the side of the terminal device 120 in FIG. 3 and FIG. 4.

For example, in an implementation, the processor 1010 is configured to perform processing actions on a side of the terminal device 120 in the embodiments shown in FIG. 3 and FIG. 4, and the transceiver 1030 is configured to perform receiving and sending actions on the side of the terminal device 120 in FIG. 3 and FIG. 4.

It should be understood that FIG. 10 is merely an example rather than a limitation. The foregoing terminal device including the transceiver module and the processing module may not depend on the structures shown in FIG. 5 to FIG. 8.

When the communication apparatus 1000 is the chip, the chip includes a processor, a memory, and a transceiver. The transceiver may be an input/output circuit or a communication interface. The processor may be a processing module, a microprocessor, or an integrated circuit integrated on the chip. The sending operation of the terminal device in the foregoing method embodiments may be understood as an output of the chip, and the receiving operation of the terminal device in the foregoing method embodiments may be understood as an input of a chip.

This application further provides a chip, including a processor, configured to invoke, from a memory, instructions stored in a memory and run instructions, to enable a communication device in which the chip is mounted to perform the methods in the foregoing examples.

This application further provides another chip, including an input interface, an output interface, and a processor. The input interface, the output interface, and the processor are connected through an internal connection path, the processor is configured to execute code in a memory, and when the code is executed, the processor is configured to perform the methods in the foregoing examples. Optionally, the chip further includes a memory. The memory is configured to store a computer program or code.

This application further provides a processor, configured to be coupled to a memory, and configured to perform the methods and the functions of the network device or the terminal device in any one of the foregoing embodiments.

Another embodiment of this application provides a computer program product including instructions. When the computer program product runs on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

**In** the descriptions of embodiments of this application, unless otherwise specified, "a plurality of" means two or more. "At least one of the following items (pieces)" or a similar expression thereof refers to any combination of these items, including any combination of singular items (pieces) or plural items (pieces). For example, at least one (piece) of a, b, or c may indicate a, b, c, a and b, a and c, b and c, or a, b, and c, where a, b, and c may be singular or plural.

**In** addition, to clearly describe the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity and an execution sequence, and the terms such as "first" and "second" do not indicate a definite difference. **In** addition, in embodiments of this application, the word such as "example" or "for example" are used to represent an example or a description.

Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

Unless otherwise specified, "/" in the descriptions of embodiments of this application represents an "or" relationship between associated objects. For example, A/B may represent A or **B. In** this application, "and/or" only describes an association relationship between associated objects, and represents that three relationships may exist. For example, A and/or B may represent the following three cases: A exists alone, both A and B exist, and B exists alone, where A and B may be singular or plural.

It should be understood that "one embodiment" or "an embodiment" mentioned throughout this specification means that particular features, structures, or characteristics related to the embodiment are included in at least one embodiment of this application.

Therefore, "in one embodiment" or "in an embodiment" appearing throughout this specification does not necessarily refer to a same embodiment. **In** addition, these particular features, structures, or characteristics may be combined in one or more embodiments in any appropriate manner.

It should be understood that sequence numbers of the foregoing processes do not mean execution sequences in various embodiments of this application. The execution sequences of the processes should be determined based on functions and internal logic of the processes, and should not be construed as any limitation on the implementation processes in embodiments of this application.

It may be understood that an "embodiment" mentioned throughout this specification means that particular features, structures, or characteristics related to this embodiment are included in at least one embodiment of this application.

Therefore, embodiments in the entire specification are not necessarily a same embodiment. **In** addition, these particular features, structures, or characteristics may be combined in one or more embodiments in any appropriate manner.

It may be understood that sequence numbers of the processes do not mean execution sequences in various embodiments of this application. The execution sequences of the processes should be determined based on functions and internal logic of the processes, and should not be construed as any limitation on implementation processes in embodiments of this application.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division, and may be another division manner during actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps in the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, comprising:
determining, by a terminal device, a reference cell and at least one other cell in a first time unit, wherein the reference cell and the at least one other cell are activated serving cells configured with transmission directions in the first time unit; and
the transmission direction of the reference cell in the first time unit collides with a transmission direction of a first other cell in the first time unit, at least one of the reference cell and the first other cell is a subband full duplex SBFD cell, the SBFD cell comprises a first subband and a second subband, and the first other cell is any one of the at least one other cell; and
determining, by the terminal device, the transmission direction of the at least one of the reference cell and the first other cell in the first time unit based on the first subband.

2. The method according to claim 1, wherein a transmission direction of the first subband in the first time unit collides with a transmission direction of the second subband in the first time unit.

3. The method according to claim 1 or 2, wherein the transmission direction comprises at least one of the following:
a signal transmission direction or a statically configured symbol direction; and
the signal transmission direction comprises at least one of the following:
a static signal transmission direction or a dynamic signal transmission direction.

4. The method according to any one of claims 1 to 3, wherein the reference cell is an activated serving cell configured with a static transmission direction in the first time unit; and
the static transmission direction comprises at least one of the following:
the static signal transmission direction or the statically configured symbol direction.

5. The method according to any one of claims 1 to 4, wherein the first subband meets at least one of the following conditions:
the first subband is configured with a signal transmission direction in the first time unit, and the second subband is not configured with a signal transmission direction in the first time unit, wherein the signal transmission direction of the first subband in the first time unit collides with a statically configured symbol direction of the second subband in the first time unit;
the first subband is configured with the signal transmission direction in the first time unit, the second subband is configured with the signal transmission direction in the first time unit, and the signal transmission direction of the first subband in the first time unit is consistent with a final signal transmission direction of the SBFD cell, wherein the signal transmission direction of the first subband in the first time unit collides with the signal transmission direction of the second subband in the first time unit; and
the first subband is configured with a statically configured symbol direction in the first time unit, the second subband is configured with the statically configured symbol direction in the first time unit, the first subband is not configured with the signal transmission direction in the first time unit, the second subband is not configured with the signal transmission direction in the first time unit, and an identity of the first subband is less than or greater than an identity of the second subband, or the statically configured symbol direction of the first subband in the first time unit is an uplink or a downlink, wherein the statically configured symbol direction of the first subband in the first time unit collides with the statically configured symbol direction of the second subband in the first time unit.

6. The method according to any one of claims 1 to 5, wherein before the determining, by a terminal device, a reference cell and at least one other cell in a first time unit, the method further comprises:
receiving, by the terminal device, first indication information sent by a network device, wherein the first indication information indicates at least two activated serving cells configured by the network device for the terminal device, and the at least two activated serving cells comprise at least one of SBFD cells.

7. The method according to claim 6, wherein the determining, by a terminal device, a reference cell and at least one other cell in a first time unit comprises:
determining, by the terminal device, a first cell set, wherein each cell in the first cell set is an activated serving cell that is configured with a static transmission direction and that is in the at least two activated serving cells; and
determining, by the terminal device, a first cell as the reference cell, wherein the first cell is any activated serving cell in the first cell set, and all cells other than the first cell in the at least two activated serving cells are the at least one other cell.

8. The method according to claim 7, wherein an index value of the first cell is a smallest value in index values of all the cells in the first cell set.

9. The method according to claim 7 or 8, wherein each of the at least one of the SBFD cells comprised in the first cell set is configured with a signal transmission direction in the first time unit.

10. The method according to any one of claims 1 to 9, wherein the method further comprises:
sending, by the terminal device, second indication information to the network device, wherein the second indication information indicates whether the terminal device supports an inter-band simultaneous transmission and reception capability.

11. The method according to claim 10, wherein
when the second indication information indicates that the terminal device supports the inter-band simultaneous transmission and reception capability, a frequency band to which all the cells in the first cell set belong is a first frequency band; or
when the second indication information indicates that the terminal device does not support the inter-band simultaneous transmission and reception capability, frequency bands to which all the cells in the first cell set belong comprise a first frequency band and a second frequency band, and the second frequency band is different from the first frequency band.

12. The method according to any one of claims 1 to 11, wherein
the first other cell is other cell configured with a directional collision handling parameter, and the directional collision handling parameter is used by the terminal device to determine that the first other cell participates in directional collision handling.

13. The method according to any one of claims 1 to 12, wherein the first time unit comprises at least one of the following:
a slot, a symbol, or a mini-slot.

14. A communication method, comprising:
determining, by a network device, a reference cell and at least one other cell in a first time unit, wherein the reference cell and the at least one other cell are activated serving cells configured with transmission directions in the first time unit; and
the transmission direction of the reference cell in the first time unit collides with a transmission direction of a first other cell in the first time unit, at least one of the reference cell and the first other cell is a subband full duplex SBFD cell, the SBFD cell comprises a first subband and a second subband, and the first other cell is any one of the at least one other cell; and
determining, by the network device, the transmission direction of the at least one of the reference cell and the first other cell in the first time unit based on the first subband.

15. The method according to claim 14, wherein a transmission direction of the first subband in the first time unit collides with a transmission direction of the second subband in the first time unit.

16. The method according to claim 14 or 15, wherein the transmission direction comprises at least one of the following:
a signal transmission direction or a statically configured symbol direction; and
the signal transmission direction comprises at least one of the following:
a static signal transmission direction or a dynamic signal transmission direction.

17. The method according to any one of claims 14 to 16, wherein the reference cell is an activated serving cell configured with a static transmission direction in the first time unit; and
the static transmission direction comprises at least one of the following:
the static signal transmission direction or the statically configured symbol direction.

18. The method according to any one of claims 14 to 17, wherein the first subband meets at least one of the following conditions:
the first subband is configured with a signal transmission direction in the first time unit, and the second subband is not configured with a signal transmission direction in the first time unit, wherein the signal transmission direction of the first subband in the first time unit collides with a statically configured symbol direction of the second subband in the first time unit;
the first subband is configured with the signal transmission direction in the first time unit, the second subband is configured with the signal transmission direction in the first time unit, and the signal transmission direction of the first subband in the first time unit is consistent with a final signal transmission direction of the SBFD cell, wherein the signal transmission direction of the first subband in the first time unit collides with the signal transmission direction of the second subband in the first time unit; and
the first subband is configured with a statically configured symbol direction in the first time unit, the second subband is configured with the statically configured symbol direction in the first time unit, the first subband is not configured with the signal transmission direction in the first time unit, the second subband is not configured with the signal transmission direction in the first time unit, and an identity of the first subband is less than or greater than an identity of the second subband, or the statically configured symbol direction of the first subband in the first time unit is an uplink or a downlink, wherein the statically configured symbol direction of the first subband in the first time unit collides with the statically configured symbol direction of the second subband in the first time unit.

19. The method according to any one of claims 14 to 18, wherein before the determining, by a network device, a reference cell and at least one other cell in a first time unit, the method further comprises:
sending, by the network device, first indication information to a terminal device, wherein the first indication information indicates at least two activated serving cells configured by the network device for the terminal device, and
the at least two activated serving cells comprise at least one of SBFD cells.

20. The method according to claim 19, wherein the determining, by a network device, a reference cell and at least one other cell in a first time unit comprises:
determining, by the network device, a first cell set, wherein each cell in the first cell set is an activated serving cell that is configured with the static transmission direction and that is in the at least two activated serving cells; and
determining, by the network device, a first cell as the reference cell, wherein the first cell is any activated serving cell in the first cell set, and all cells other than the first cell in the at least two activated serving cells are the at least one other cell.

21. The method according to claim 20, wherein an index value of the first cell is a smallest value in index values of all the cells in the first cell set.

22. The method according to claim 20 or 21, wherein each of the at least one of the SBFD cells comprised in the first cell set is configured with a signal transmission direction in the first time unit.

23. The method according to any one of claims 14 to 22, wherein the method further comprises:
receiving, by the network device, second indication information from the terminal device, wherein the second indication information indicates whether the terminal device supports an inter-band simultaneous transmission and reception capability.

24. The method according to claim 23, wherein
when the second indication information indicates that the terminal device supports the inter-band simultaneous transmission and reception capability, a frequency band to which all the cells in the first cell set belong is a first frequency band; or
when the second indication information indicates that the terminal device does not support the inter-band simultaneous transmission and reception capability, frequency bands to which all the cells in the first cell set belong comprise a first frequency band and a second frequency band, and the second frequency band is different from the first frequency band.

25. The method according to any one of claims 14 to 24, wherein
the first other cell is other cell configured with a directional collision handling parameter, and the directional collision handling parameter is used by the terminal device to determine that the first other cell participates in directional collision handling.

26. The method according to any one of claims 14 to 25, wherein the first time unit comprises at least one of the following:
a slot, a symbol, or a mini-slot.

27. A communication apparatus, comprising:
a processing unit, configured to determine a reference cell and at least one other cell in a first time unit, wherein the reference cell and the at least one other cell are activated serving cells configured with transmission directions in the first time unit, wherein
the transmission direction of the reference cell in the first time unit collides with a transmission direction of a first other cell in the first time unit, at least one of the reference cell and the first other cell is a subband full duplex SBFD cell, the SBFD cell comprises a first subband and a second subband, and the first other cell is any one of the at least one other cell; and
the processing unit is further configured to determine the transmission direction of the at least one of the reference cell and the first other cell in the first time unit based on the first subband.

28. The apparatus according to claim 27, wherein a transmission direction of the first subband in the first time unit collides with a transmission direction of the second subband in the first time unit.

29. The apparatus according to claim 27 or 28, wherein the transmission direction comprises at least one of the following:
a signal transmission direction or a statically configured symbol direction; and
the signal transmission direction comprises at least one of the following:
a static signal transmission direction or a dynamic signal transmission direction.

30. The apparatus according to any one of claims 27 to 29, wherein the reference cell is an activated serving cell configured with a static transmission direction in the first time unit; and
the static transmission direction comprises at least one of the following:
the static signal transmission direction or the statically configured symbol direction.

31. The apparatus according to any one of claims 27 to 30, wherein the first subband meets at least one of the following conditions:
the first subband is configured with a signal transmission direction in the first time unit, and the second subband is not configured with a signal transmission direction in the first time unit, wherein the signal transmission direction of the first subband in the first time unit collides with a statically configured symbol direction of the second subband in the first time unit;
the first subband is configured with the signal transmission direction in the first time unit, the second subband is configured with the signal transmission direction in the first time unit, and the signal transmission direction of the first subband in the first time unit is consistent with a final signal transmission direction of the SBFD cell, wherein the signal transmission direction of the first subband in the first time unit collides with the signal transmission direction of the second subband in the first time unit; or
the first subband is configured with a statically configured symbol direction in the first time unit, the second subband is configured with the statically configured symbol direction in the first time unit, the first subband is not configured with the signal transmission direction in the first time unit, the second subband is not configured with the signal transmission direction in the first time unit, and an identity of the first subband is less than or greater than an identity of the second subband, or the statically configured symbol direction of the first subband in the first time unit is an uplink or a downlink, wherein
the statically configured symbol direction of the first subband in the first time unit collides with the statically configured symbol direction of the second subband in the first time unit.

32. The apparatus according to any one of claims 27 to 31, wherein the apparatus further comprises: a transceiver unit, configured to receive first indication information sent by a network device, wherein the first indication information indicates at least two activated serving cells configured by the network device for a terminal device, and the at least two activated serving cells comprise at least one of SBFD cells.

33. The apparatus according to claim 32, wherein the processing unit is configured to:
determine a first cell set, wherein each cell in the first cell set is an activated serving cell that is configured with the static transmission direction and that is in the at least two activated serving cells; and
determine a first cell as the reference cell, wherein the first cell is any activated serving cell in the first cell set, and all cells other than the first cell in the at least two activated serving cells are the at least one other cell.

34. The apparatus according to claim 33, wherein an index value of the first cell is a smallest value in index values of all the cells in the first cell set.

35. The apparatus according to claim 33 or 34, wherein each of the at least one of the SBFD cells comprised in the first cell set is configured with a signal transmission direction in the first time unit.

36. The apparatus according to any one of claims 27 to 35, wherein the transceiver unit is configured to send second indication information to the network device, wherein the second indication information indicates whether the communication apparatus supports an inter-band simultaneous transmission and reception capability.

37. The apparatus according to claim 36, wherein
when the second indication information indicates that the communication apparatus supports the inter-band simultaneous transmission and reception capability, a frequency band to which all the cells in the first cell set belong is a first frequency band; or
when the second indication information indicates that the communication apparatus does not support the inter-band simultaneous transmission and reception capability, frequency bands to which all the cells in the first cell set belong comprise a first frequency band and a second frequency band, and the second frequency band is different from the first frequency band.

38. The apparatus according to any one of claims 27 to 37, wherein
the first other cell is other cell configured with a directional collision handling parameter, and the directional collision handling parameter is used by the communication apparatus to determine that the first other cell participates in directional collision handling.

39. The apparatus according to any one of claims 27 to 38, wherein the first time unit comprises at least one of the following:
a slot, a symbol, or a mini-slot.

40. A communication apparatus, comprising:
a processing unit, configured to determine a reference cell and at least one other cell in a first time unit, wherein the reference cell and the at least one other cell are activated serving cells configured with transmission directions in the first time unit, wherein
the transmission direction of the reference cell in the first time unit collides with a transmission direction of a first other cell in the first time unit, at least one of the reference cell and the first other cell is a subband full duplex SBFD cell, wherein the SBFD cell comprises a first subband and a second subband, and the first other cell is any one of the at least one other cell; and
the processing unit is further configured to determine the transmission direction of the at least one of the reference cell and the first other cell in the first time unit based on the first subband.

41. The apparatus according to claim 40, wherein a transmission direction of the first subband in the first time unit collides with a transmission direction of the second subband in the first time unit.

42. The apparatus according to claim 40 or 41, wherein the transmission direction comprises at least one of the following:
a signal transmission direction or a statically configured symbol direction; and
the signal transmission direction comprises at least one of the following:
a static signal transmission direction or a dynamic signal transmission direction.

43. The apparatus according to any one of claims 40 to 42, wherein the reference cell is an activated serving cell configured with a static transmission direction in the first time unit; and
the static transmission direction comprises at least one of the following:
the static signal transmission direction or the statically configured symbol direction.

44. The apparatus according to any one of claims 40 to 43, wherein the first subband meets at least one of the following conditions:
the first subband is configured with a signal transmission direction in the first time unit, and the second subband is not configured with a signal transmission direction in the first time unit, wherein the signal transmission direction of the first subband in the first time unit collides with a statically configured symbol direction of the second subband in the first time unit;
the first subband is configured with the signal transmission direction in the first time unit, the second subband is configured with the signal transmission direction in the first time unit, and the signal transmission direction of the first subband in the first time unit is consistent with a final signal transmission direction of the SBFD cell, wherein the signal transmission direction of the first subband in the first time unit collides with the signal transmission direction of the second subband in the first time unit; or
the first subband is configured with a statically configured symbol direction in the first time unit, the second subband is configured with the statically configured symbol direction in the first time unit, the first subband is not configured with the signal transmission direction in the first time unit, the second subband is not configured with the signal transmission direction in the first time unit, and an identity of the first subband is less than or greater than an identity of the second subband, or the statically configured symbol direction of the first subband in the first time unit is an uplink or a downlink, wherein the statically configured symbol direction of the first subband in the first time unit collides with the statically configured symbol direction of the second subband in the first time unit.

45. The apparatus according to any one of claims 40 to 44, wherein the apparatus further comprises:
a transceiver unit, configured to send first indication information to a terminal device, wherein the first indication information indicates at least two activated serving cells configured by the communication apparatus for the terminal device, and the at least two activated serving cells comprise at least one of SBFD cells.

46. The apparatus according to claim 45, wherein the processing unit is further configured to:
determine a first cell set, wherein each cell in the first cell set is an activated serving cell that is configured with the static transmission direction and that is in the at least two activated serving cells; and
determine a first cell as the reference cell, wherein the first cell is any activated serving cell in the first cell set, and all cells other than the first cell in the at least two activated serving cells are the at least one other cell.

47. The apparatus according to claim 46, wherein an index value of the first cell is a smallest value in index values of all the cells in the first cell set.

48. The apparatus according to claim 46 or 47, wherein each of the at least one of the SBFD cells comprised in the first cell set is configured with a signal transmission direction in the first time unit.

49. The method according to any one of claims 40 to 48, wherein the transceiver unit is configured to receive second indication information from the terminal device, wherein the second indication information indicates whether the terminal device supports an inter-band simultaneous transmission and reception capability.

50. The method according to claim 49, wherein
when the second indication information indicates that the terminal device supports the inter-band simultaneous transmission and reception capability, a frequency band to which all the cells in the first cell set belong is a first frequency band; or
when the second indication information indicates that the terminal device does not support the inter-band simultaneous transmission and reception capability, frequency bands to which all the cells in the first cell set belong comprise a first frequency band and a second frequency band, and the second frequency band is different from the first frequency band.

51. The method according to any one of claims 40 to 50, wherein
the first other cell is other cell configured with a directional collision handling parameter, and the directional collision handling parameter is used by the terminal device to determine that the first other cell participates in directional collision handling.

52. The method according to any one of claims 40 to 51, wherein the first time unit comprises at least one of the following:
a slot, a symbol, or a mini-slot.

53. A communication apparatus, comprising a processor, wherein the processor is coupled to a memory, and the processor is configured to execute a computer program or instructions, to enable the communication apparatus to perform the method according to any one of claims 1 to 26.

54. A communication apparatus, comprising a logic circuit and an input/output interface, wherein the logic circuit is configured to execute a computer program or instructions, to enable the communication apparatus to perform the method according to any one of claims 1 to 26.

55. A computer-readable storage medium, comprising a computer program or instructions, wherein when the computer program or the instructions are run on a computer, the computer is enabled to perform the method according to any one of claims 1 to 26.

56. A computer program product, comprising instructions, wherein when the instructions are run on a computer, the computer is enabled to perform the method according to any one of claims 1 to 26.
